(19) Europäisches Patentamt
European Patent Office
Office européen des brevets

(11) **EP 4 776 246 A1**

(12) **EUROPEAN PATENT APPLICATION**

(43) Date of publication:
**15.07.2026 Bulletin 2026/29**

(21) Application number: **25215493.5**

(22) Date of filing: **13.11.2025**

(51) International Patent Classification (IPC):
***G06V 20/17*** *(2022.01)* ***B64D 45/08*** *(2006.01)*
***G08G 5/54*** *(2025.01)*

(52) Cooperative Patent Classification (CPC):
**G06V 20/17; B64D 45/08; G08G 5/54;** G08G 5/21

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.01.2025 US 202563744056 P**
**11.08.2025 US 202519296627**

(71) Applicant: **The Boeing Company**
**Arlington, VA 22202 (US)**

(72) Inventors:
- **LI, Rongsheng**
  **Arlington, 22202 (US)**
- **HARRIS, Caleb Matthew**
  **Arlington, 22202 (US)**
- **MEFFORD, David Keith**
  **Arlington, 22202 (US)**
- **NAKAMURA, Takuma**
  **Arlington, 22202 (US)**
- **TOLSTOV, Andrey**
  **Arlington, 22202 (US)**
- **TSAO, Tung-Ching**
  **Arlington, 22202 (US)**
- **YOO, Chang Jin**
  **Arlington, 22202 (US)**
- **GRUEBELE, Cody Lucas**
  **Arlington, 22202 (US)**

(74) Representative: **Boult Wade Tennant LLP**
**Salisbury Square House**
**8 Salisbury Square**
**London EC4Y 8AP (GB)**

# (54) METHODS AND APPARATUS FOR MULTI-LAYERED INTEGRITY VALIDATION OF VISION-BASED GUIDANCE

(57) Methods and apparatus for multi-layered integrity validation of vision-based vehicle guidance are disclosed. A disclosed example system includes an image sensor carried by a vehicle, the image sensor to identify light sources of a ground-based pattern display, wherein a spatial arrangement of varying distances between the light sources defines a light pattern array, and at least one processor circuitry to perform a multi-layer integrity validation corresponding to the light pattern array based on the identified light sources for guidance of the vehicle via the light pattern array.

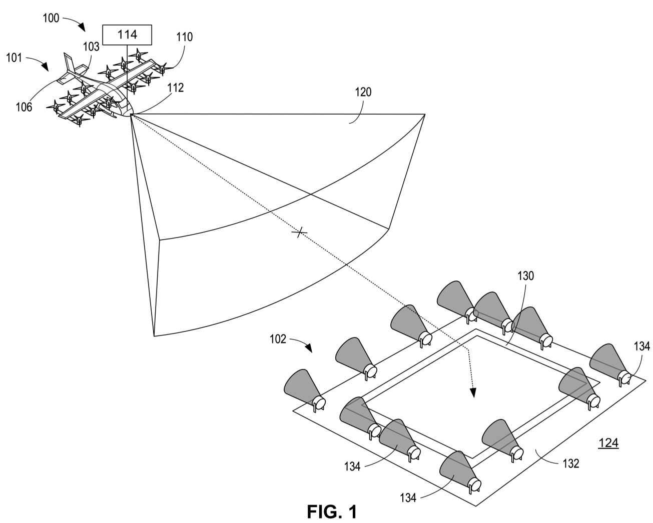

FIG. 1

EP 4 776 246 A1

Processed by Luminess, 75001 PARIS (FR)

## Description

FIELD OF THE DISCLOSURE

This disclosure relates generally to vehicle guidance and, more particularly, to methods and apparatus for multi-layered integrity validation of vision-based vehicle guidance.

BACKGROUND

Aircraft, such as vertical takeoff and landing (VTOL) aircraft, can require guidance for landing. Specifically, passenger carrying autonomous aircraft can necessitate precision positioning and attitude determination to comply with regulatory certifications. To meet the regulatory certifications, some known systems employ a ground-based augmentation system (GBAS) and ILS (Instrument Landing System). However, known systems that utilize GBAS can be subject to jamming/spoofing, require radio frequency (RF) spectrum allocation, and can necessitate usage of complex hardware and software to function, thereby limiting adoption at smaller airports. Accordingly, known GBAS implementations can require relatively complex and expensive equipment, devices and/or components that can also increase weight of the aircraft. ILS also necessitates relatively complex and expensive ground infrastructure, including localizer and directional glide slope antennas for each approach path.

SUMMARY

An example system includes an image sensor carried by a vehicle, the image sensor to identify light sources of a ground-based pattern display , wherein a spatial arrangement of varying distances between the light sources defines a light pattern array, and at least one processor circuitry to perform a multi-layer integrity validation corresponding to the light pattern array based on the identified light sources for guidance of the vehicle via the light pattern array.

An example apparatus to validate data corresponding to a ground-based light pattern array for guidance of a vehicle therewith includes interface circuitry communicatively coupled to an image sensor supported by the vehicle, machine readable instructions, and programmable circuitry to at least one of instantiate or execute the machine readable instructions to identify, based on output from the image sensor, light sources of the ground-based light pattern array, an arrangement of the light sources defining a light pattern array, validate the data corresponding to the light pattern array based on the identified light sources via a multi-layer integrity validation, and enable guidance of the vehicle via the light pattern array in response to the data corresponding to the light pattern array being validated.

An example at least one non-transitory machine-readable medium includes machine-readable instructions to cause at least one processor circuit to at least identify, based on output from an image sensor of a vehicle, light sources of a pattern display, the light sources defining a pattern arrangement, validate data corresponding to the pattern arrangement with a multilayered integrity validation based on the identified light sources, and determine a position of the vehicle with respect to the pattern arrangement in response to the data being validated.

An example method includes identifying, based on output from an image sensor carried by a vehicle, light sources of a ground-based light pattern array, wherein a spatial arrangement of the light sources defines the light pattern array, validating data corresponding to the light pattern array via a multi-layer integrity validation, and enabling guidance of the vehicle via the light pattern array in response to the data corresponding to the light pattern array being validated.

An example method includes identifying, based on output from an image sensor carried by a vehicle, light sources of a ground-based light pattern array, wherein a spatial arrangement of the light sources defines the light pattern array, validating data corresponding to the light pattern array via a multi-layer integrity validation, and enabling guidance of the vehicle via the light pattern array in response to the data corresponding to the light pattern array being validated.

BRIEF DESCRIPTION OF THE DRAWINGS

FIG. 1 is an example vision-based guidance system in accordance with teachings of this disclosure.
FIG. 2A is a schematic view of an example vision-based analysis architecture that can be implemented in the example vision-based guidance system of FIG. 1.
FIG. 2B is an example process flow of a validation process that can be implemented in examples disclosed herein.
FIG. 3 illustrates an apparatus with alternative example pattern displays in accordance with teachings of this disclosure.
FIGS. 4A-4C illustrate example features of data analysis that can be implemented in examples disclosed herein.
FIGS. 5A-5E illustrate example features of image pre-processing that can be implemented in examples disclosed herein.

FIGS. 6A-6C illustrate example features of color rejection and image thresholding that can be implemented in examples disclosed herein.

FIGS. 7A and 7B illustrate example clustering and centroiding that can be implemented in examples disclosed herein.

FIG. 8 is a block diagram of an example vision-based guidance analysis system in accordance with teachings of this disclosure.

FIGS. 9 and 10 are flowcharts representative of example machine readable instructions and/or example operations that may be executed, instantiated, and/or performed by example programmable circuitry to implement the vision-based guidance analysis system of FIG. 8.

FIG. 11 is a block diagram of an example processing platform including programmable circuitry structured to execute, instantiate, and/or perform the example machine readable instructions and/or perform the example operations of FIGS. 9 and 10 to implement the vision-based guidance analysis system of FIG. 8.

FIG. 12 is a block diagram of an example implementation of the programmable circuitry of FIG. 11.

FIG. 13 is a block diagram of another example implementation of the programmable circuitry of FIG. 11.

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

DETAILED DESCRIPTION

Methods and apparatus for multi-layered integrity validation of vision-based vehicle guidance are disclosed. Current solutions necessitate that a pilot be involved in phases of take-off and landing. An autonomous solution can utilize machine learning (ML)/artificial intelligence (AI) based pattern recognition that can be difficult to certify. Particularly, concerns about ML/AI solutions can arise based on whether they are solution deterministic and whether they can be tested (e.g., for certification purposes). Currently, alternative technology autonomy solutions can only be approved to support approach down to a certain minima and, subsequently, a pilot or operator must take over for vertical takeoff/landing to the ground. Further, development is relatively slow, and an inertial landing system (ILS) that is expected to be available at major airports is unlikely to be available for a vertiport for cost and real-estate reasons. Still further, there are limitations with the ability to reuse the same RF spectrum over multiple vertiports that are relatively close to one another.

Examples disclosed herein utilize multi-layer integrity validation, thereby enabling the use of vision-based navigation/guidance for in-flight critical commercial applications that necessitate precision take-off and landing, as well as for global positioning system (GPS) denied navigation. Accordingly, examples disclosed herein can meet Category CAT III C requirements corresponding to fully autonomous landing without intervention of a pilot. Currently, CAT III C requirements are regarded as necessitating a relatively high level of precision in terms of approach and landing systems in aviation.

Examples disclosed herein have numerous benefits. Examples disclosed herein do not necessitate information from external sensors, as opposed to most navigation systems that are coupled to global navigation satellite system (GNSS) or GPS receivers. Further, image processing methods of examples disclosed herein can be applicable to a multitude of day/night lighting conditions, visible and infrared (IR) or near infrared (NIR) spectrum cameras, etc. Examples disclosed herein can, thus, be certifiable. Further, examples disclosed herein can be at least partially implemented in image sensor/camera hardware. Examples disclosed herein may be used in conjunction with AI/ML implementations.

Examples disclosed herein utilize visible, IR, or NIR light patterns (e.g., light patterns, light pattern arrays, light pattern displays, etc.) with light sources (e.g., targets, vertiport lights, etc.) arranged along a periphery thereof to guide movement of a vehicle, such as an aircraft (e.g., a manned autonomous aircraft). The light sources can be arranged in a pattern with spacing that is irregular (e.g., different edges of the light pattern have different spacing and/or distances between respective light sources). Examples disclosed herein utilize a multilayered validation (e.g., a multilayered validation process) along with integrity monitoring to ensure that the vehicle can be properly/accurately guided based on the light pattern. To perform the multilayered validation, examples disclosed herein can utilize a clutter rejection along with a geometry/pattern/template match. Further, data from an image sensor (e.g., a solution based on line of sight data corresponding to the image sensor) can be validated and matched with inertial data for integrity monitoring.

According to some examples disclosed herein, image-processing, such as spatial filtering, is performed to highlight the aforementioned light sources. In some examples, a color-based rejection (e.g., a four color-based rejection) of data from the image sensor is performed. In some such examples, RGB content filtering is performed with respect to an RGB-NIR image. In some examples, image thresholding is performed to reject parts of a scene where the intensity is less than a threshold value. Additionally or alternatively, clustering and centroiding of the data from the image sensor is performed. In some examples, different colors (e.g., alternating colors, a patterned sequence of different colors, etc.) are utilized in the light pattern to make the light more distinguishable and easier to detect/sense. According to some examples disclosed herein, a combination of RGB and NIR light sources are utilized in the pattern. Additionally or alternatively, one of the light sources emits light at a first emission spectrum while another of the light sources emits light at a second emission spectrum different from the first emission spectrum, thereby enhancing visibility of the light pattern.

FIG. 1 is an example vision-based guidance system 100 in accordance with teachings of this disclosure. In the illustrated view of FIG. 1, an example aircraft 101 is shown being guided by a pattern display (e.g., a ground-based pattern display, a pattern array of light sources, etc.) 102, which is implemented as a landing pad (e.g., a vehicle pad, a landing/deployment pad, a vertiport, etc.) in this example for the aircraft 101 to land thereon. In this and certain other examples, the aircraft 101 includes a fuselage 103, a rear/aft portion 106, and propeller assemblies 110. Further, the aircraft 101 includes at least one sensor 112, which is implemented as a camera, a light detection device and/or an image sensor in this example, and a navigation controller 114. In this example, the sensor(s) 112 defines a field of view 120 of the aircraft 101.

In operation, the aircraft 101 is implemented such that the aircraft 101 can be switched between a hover mode (e.g., a hovering mode, a takeoff mode, etc.), and a cruise mode (e.g., a primary flight mode, a cruising mode, etc.) by moving, rotating and/or orienting the propeller assemblies 110. To place the example aircraft 101 in the hover mode or the cruise mode, the propeller assemblies 110 (and/or an aerodynamic body coupled thereto) can rotate relative to the fuselage 103. The aircraft 101 may be a vertical takeoff and landing (VTOL) aircraft or any other aircraft including, but not limited to, fixed wing aircraft, short takeoff and landing (STOL) aircraft, rotorcraft, aircraft with fan arrays, etc. Further, examples disclosed herein can be implemented in other types of manned or unmanned vehicles including, but not limited to, hovercraft, watercraft, submersibles, spacecraft, ground-based vehicles, etc.

To enable the aircraft 101 to be guided by the example pattern display 102 (e.g., to land onto the pattern display 102), the pattern display 102 includes a unique arrangement and/or spacing of light sources 134 (e.g., lights, light emitters, powered light sources, light emitting diodes (LEDs), etc.) that is detectable by the sensor(s) 112 to guide the aircraft 101 thereto. In particular, the aircraft 101 validates data corresponding to the pattern display 102 for guiding the aircraft 101 with the pattern display 102. The pattern display 102 of the illustrated example includes a landing pad area 130, and a perimeter 132 which, in turn, includes the aforementioned light sources 134. The example perimeter 132 surrounds or extends around the landing pad area 130, and is quadrilateral or substantially quadrilateral in shape (e.g., rectangular and/or square in shape, etc.). However, the perimeter 132 can be any other appropriate shape and/or geometric profile (e.g., ellipsoid, triangular, hexagonal, oval, polygonal, etc.). As will be discussed in greater detail below in connection with FIGS. 2-13, examples disclosed herein enable cost-effective guidance of the aircraft 101 by the pattern display 102 (e.g., for landing or takeoff from a surface of the pattern display 102, to move toward or away from the pattern display 102, etc.). As mentioned above, the perimeter 132 includes the light sources 134 (e.g., four of the light sources 134 on each side/edge of the perimeter 132), The light sources 134 are spaced apart (e.g., evenly spaced apart, irregularly spaced apart, unevenly spaced apart, etc.) from one another along the perimeter 132. In other words, the light sources 134 are arranged (e.g., spatially arranged, irregularly arranged, arranged along a perimeter, etc.) in a pattern (e.g., a spatial pattern, a unique spatial pattern, a pattern array, a light pattern array, etc.). The light sources 134 may be of a same or different type from one another (e.g., a combination of visible and IR/NIR light sources).

To define a pattern and/or spatial arrangement of the light sources 134, examples disclosed herein utilize varying spacing between the light sources 134 on each side/edge. Further, at least two of the light sources 134 can have a different light characteristic from one another, thereby defining a discernible pattern (e.g., a two-dimensional pattern, a spatial pattern, etc.). Particularly, two of the light sources 134 may emit different signal/light types (e.g., visible/RGB and IR/NIR, etc.). In this and certain other examples, visual detection of the aforementioned light sources 134 based on sensor output of the sensor(s) 112 enables the navigation controller 114 to determine, identify and/or discern the pattern and, thus, calculate a relative distance/position/attitude/orientation of the aircraft 101 toward or away from the pattern display 102. In particular, the navigation controller 114 utilizes multiple line of sight (LOS) vectors for each of the light sources 134 for determination of the position and attitude of the aircraft 101 with respect to the pattern display 102 and/or the landing pad area 130.

In some examples, the sensor(s) 112 include(s) and/or utilize(s) a filter (e.g., a polarizing filter, a light spectrum filter, etc.) to facilitate detection of the light sources 134 of the perimeter 132. Additionally, or alternatively, emissions of the light sources 134 of the perimeter 132 are shifted in frequency and/or color from one another to facilitate detection thereof (e.g., shifted toward a blue region of a light frequency spectrum) by the sensor(s) 112. In some such examples, the filter is tuned and/or adjusted based on characteristics of the light sources 134 (e.g., the filter is shifted in frequency to facilitate detection of the light sources from a relatively far distance and/or through inclement weather conditions, etc.).

FIG. 2A is a schematic view of an example vision-based analysis architecture 200 that can be implemented in the example vision-based guidance system 100 of FIG. 1. In the illustrated example of FIG. 2A, the example vision-based analysis architecture 200 includes at least one camera 202, an inertial measure unit (IMU) 206, a GNSS receiver (e.g., a GPS receiver) 208, hardware interface 210, which is implemented as an FPGA and/or circuit in this example, camera interface software 212, a GNSS interface software 214, an IMU interface software 216, image processing circuitry 218, altitude/position solution processing 220, an initializer 222, and all source position navigation and timing (ASPNT) navigator 224 as a vision take-off landing system (ViTALS) implementation. In some examples, the vision-based analysis architecture 200 includes and/or is communicatively coupled to a GNSS/GPS receiver 230 and/or a real-time kinetic (RTK) receiver 232, either of which may be used for supplemental/backup information.

In operation, output (e.g., measured output, detected output, etc.) from the camera 202 and is utilized by the camera interface software 212. In turn, data corresponding to the output is utilized by the image processing circuitry 218. Further, the IMU 206 and the GNSS/GPS receiver 208 provide output to the guidance/navigation board/circuitry 210 which, in turn, provides and/or forwards data to the GNSS/GPS interface software 214 as well as the IMU interface software 216. In the illustrated example of FIG. 2A, the image processing circuitry 218 utilizes the data/output from the camera 202 for the attitude/position solution processing 220 (e.g., for a camera-based solution). In turn, in accordance with teachings of this disclosure, the ASPNT navigator 224 is utilized to match the solution from the attitude/position solution processing 220 corresponding to the image sensor with inertial data from the IMU 206 and/or the IMU interface software 216, thereby validating the solution for use in guidance of the vehicle. In some examples, the attitude/position solution processing 220 utilizes a least squares method for determination of the position and/or the attitude. In this and certain other examples, the ASPNT navigator provides updates to the initializer 222.

According to examples disclosed herein, integrity monitoring is performed with multiple layers. For example, a first layer can correspond to a clutter removal rejection. Additionally or alternatively, a spatial filtering-based rejection is performed.

In this and certain other examples, a second layer corresponds to geometry-based candidate screening. In particular, detection candidates can be defined.

According to examples disclosed herein, a third layer can correspond to a geometry-based candidate attitude/position solution or an equivalent Affine transformation, for example. In particular, the solution can be verified by an internal consistency check.

In this and certain other examples, a fourth layer corresponds to verification of a camera-based solution validation. In some examples. a redundancy in the light sources (e.g., four light sources are needed to determine a position) and a number of light sources exceeding four can be used to cross-validate the measurements. Accordingly, to validate the camera-based solution, a database is utilized for positions of the light sources and for transformation of the position to a camera frame using attitude and position of the camera (e.g., determined with four light sources). In turn, a predicted position of the light sources detected by the camera is matched against the measured position of the light sources. If the predicted and measured light source positions match, the light sources are consistent. In contrast, if the predicted and measured light source positions are not consistent, an error may be deemed to have occurred in determining a candidate solution or the pattern/array of light sources is incorrect.

FIG. 2B is an example process flow 240 of an example multilayered validation process that can be implemented in examples disclosed herein. According to examples disclosed herein, a first layer 242 can correspond to clutter rejection/removal, a second layer 244 can correspond to geometry-based candidate screening/integrity protection, a third layer 246 can correspond to a template match with integrity monitoring, and a fourth layer 248 can correspond to an inertial navigation system (INS) level. In this and certain other examples, the fourth layer 248 corresponds to an integrity check against the INS/ASPNT solution by utilizing Kalman filter residuals. In some examples, during the first layer 242, a color-based rejection (e.g., a four color-based rejection) is performed. Further, a spatial filtering-based rejection can be performed.

According to examples disclosed herein, the first layer 242 can correspond to clutter removal via RGB-NIR filtering, and windowing and/or selection of a region of interest can be performed. Further, windowing a selected region of interest and spatial filtering can be performed.

In this and certain other examples, the second layer 244 includes candidate screening/integrity protection. For example, the second layer 244 includes candidate detection/identification. According to some examples disclosed herein, the Desargues theorem is utilized to form detection candidates. Additionally or alternatively, line-forming, line segment ratio, etc. is performed for candidate detection. In some examples, a projection invariant is determined.

According to examples disclosed herein, one or more of the following approaches can be utilized in the second layer 244: (i) candidate screening based on three-light-formed tri-angles and Desargues theorem, (ii) candidate screening based on four-light-formed lines and matching of line-segment ratios, (iii) candidate screening based on corners formed by two lines, or (iv) candidate screening based on two parallel lines. Accordingly, if more of the approaches are chosen for use, less viable clutters will be present for a next layer. Conversely, if less approaches are used, more candidates will be present for the next layer. Accordingly, a decision can be a tradeoff between the throughput usage of the two layers, which can be decided by the quality of processing of the first layer 242. In particular, if in most cases, the first layer 242 may leave less cluttering based on clutter rejection. Thus, in some examples, it may be advantageous to perform (i) candidate screening based on three-light-formed tri-angles and Desargues theorem alone.

In the illustrated example of FIG. 2B, the third layer 246 corresponds to a template match. In particular, the third layer 246 corresponds to a candidate Attitude/Position Solution (or the equivalent Affine Transformation) formation and verification by internal consistency check. According to some examples disclosed herein, a minimum of three candidate lights are utilized to determine a candidate attitude/position solution, which can be equivalent to the determination of an Affine transformation. In some such examples, k= 4 or more to ensure good accuracy of the candidate solution. Further, remaining n-k candidate lights can be utilized to check an internal consistency in the sense that using the candidate attitude/position solution (or the equivalent Affine transformation) created using the k candidate lights, with the vertiport light pattern database, can be used to predict the expected position in the camera field of view (FOV) of each of the lights in the vertiports. As a result, the predicted position can be checked against the measured position as a verification. According to examples disclosed herein, an increase in lights matching with the prediction corresponds to a higher integrity.

In some examples, a RANdom SAmple Consensus (RANSAC) analysis can be performed. In other words, a random proposal and checking process can be implemented. Further, an estimate of an Affine transformation can be determined, for example. In some examples, an autonomous integrity monitoring (AIM) can be performed such that the process can return to the RANSAC analysis for convergence if necessary. In some examples, a number of candidate/-proposed solutions are reduced (e.g., reduced to one or two solutions). Further, a position/altitude fix can be updated. In some examples, light measurements with identifiers are determined.

According to some examples disclosed herein, in the fourth layer 248, verification of a camera-based attitude/position solution against the solution propagated with an inertial navigation algorithm and inertial measurement unit (IMU) data from the validated navigation solution, which can correspond to the results of utilizing sensor measurements prior to the All Source PNT solution (ASPNT).

According to some examples disclosed herein, two solutions are compared: (a) a camera-based attitude/position solution that has passed integrity tests of the first, second and third layers 242, 244, 246; and (b) an attitude/position solution propagated with an inertial navigation algorithm and inertial measurement unit (IMU) data from the validated navigation solution (e.g., results of using the prior sensor measurements), Using the covariance matrix predicted by the Kalman Filter and the covariance matrix determined at the end of the third layer 246, a threshold for position and attitude difference between the two solutions can be determined. Accordingly, if the difference is above a threshold, the camera-based solution is rejected. In particular, a reason the inertial propagated ASPNT solution is retained due to three dissimilar IMUs is to ensure the integrity of the inertial data, for example.

According to some examples disclosed herein, an integrity check can be performed against a Kalman filter corresponding to the INS data. The multilayered validation of FIG. 2B is only an example and any other appropriate number of layers and/or types of layers can be implemented instead.

FIG. 3 illustrates an apparatus 300 having alternate example pattern displays 302, 304 in accordance with teachings of this disclosure. In this and certain other examples, the pattern displays 302, 304 are shown supported by a stand/mount 306. According to examples disclosed herein, the pattern displays 302, 304 can be utilized separately from one another or in tandem. According to examples disclosed herein, the pattern display 302 exhibits a generally rectangular shape with a grid of light sources arranged therein. The example pattern display 302 can be uniquely identified based on the spacing of the light sources of its defined grid (e.g., differing spacing therebetween, etc.). In this and certain other examples, the pattern display 302 corresponds to NIR light emitters.

In some examples, the pattern display 304 having a distinct shape from the pattern display 302 is utilized. The example pattern display 304 can output visible light/RGB light and is ellipsoid and/or circular in shape (or substantially ellipsoid and/or circular in shape) and can include light sources arranged along radial portions thereof. In some examples, the light sources of the pattern display 304 are spaced apart to define a unique pattern. For example, the light sources of the pattern display 304 are positioned at different radial distances from one another, thereby defining a unique pattern thereof. Examples disclosed herein can be utilized in a guide for a landing zone or as part of the landing zone.

FIGS. 4A-4C illustrate example features of data analysis that can be implemented in examples disclosed herein. Turning to FIG. 4A, an example spatial pattern/distribution 400 of light sources of a vertiport is shown. In the illustrated example of FIG. 4A, the spatial pattern/distribution of the light sources includes the light sources spaced along a periphery with defined spacing therebetween. In particular, each edge/side has four light sources in this and certain other examples, and light sources of each side/edge have different spacing from the other sides/edges. In other words, the spacing between the light sources is different/irregular on each side/edge in these examples. However, any other appropriate number of light sources and spacing arrangements can be implemented instead.

FIG. 4B illustrates a graph 410 depicting single line cross ratios with respect to light source separation distances. In particular, the depiction of FIG. 4B corresponds to separation between the light sources. In this particular example, the separation is 11 meters (m) or approximately 11 m.

FIG. 4C depicts a graph 420 depicting identified and/or determined coordinates of the light sources shown in a coordinate grid. In particular, the depiction of FIG. 4C corresponds to the light pattern as surveyed/realized. As can be seen in FIG. 4C, the surveyed/realized distances are relatively close to those shown in FIG. 4A.

FIGS. 5A-5E illustrate example features of image pre-processing that can be implemented in examples disclosed herein. According to examples disclosed herein, targets (e.g., vertiport lights/light sources, etc.) are highlighted with respect to the rest of the image by performing image transformations, such as an image convolution for detection enhancements. For example, these transformations are selected to enhance visibility of features of the targets, such as their edges, gaussian shape, or circular contour.

According to examples disclosed herein, spatial filters are image processing tools that analyze and manipulate pixel intensities in a local vicinity/neighborhood to achieve specific effects. The function of the spatial filters can be to enhance, suppress, or extract features from an image, making them essential for tasks like edge detection, noise reduction, and feature enhancement. To that end, filters can be selected based on the nature of the image and the desired outcome. For example, smoothing filters like Gaussian blur are used to reduce noise, while edge-detection filters such as a Laplacian of Gaussian (LoG) or Difference of Gaussians (DoG) emphasize boundaries and regions of intensity change. Morphological filters such as the top-hat transform can highlight relatively small structures, while gray-level transformations ca adjust brightness and contrast for increased visualization. According to examples disclosed herein, the selection of a filter depends on the specific features to be enhanced or suppressed, the scale of interest, and the trade-offs between resolution, noise suppression, and computational efficiency.

Turning to FIG. 5A, according to examples disclosed herein, the Laplacian of Gaussian (LoG) can be an advantageous transform to either find edges or "blobs" in an image. The example depicted in FIG. 5A is composed by a Laplacian and a Gaussian filter. In particular, a Gaussian filter is an approximation to the Gaussian function. For example, the Gaussian filter can be employed to blur the image, reduce noise of the image and diminish the effect of sharp changes in intensity between pixels. To overcome the noise sensitivity of the Laplacian, a Gaussian filtering step can be performed prior to finding the zero crossings of the second derivative, as a result a Laplacian of Gaussian, for example.

The left side of FIG. 5A depicts a 1-D Intensity value distribution or intensity function, denoted as F(x). The middle portion of FIG. 5A depicts a first derivative of the intensity function. Its equivalent applied to the 2D image I(x,y) is the gradient function. The right portion of FIG 5A depicts a second derivative of the intensity function, equivalent to the Laplacian operator in 2D. Accordingly, the following expressions can be utilized in examples disclosed herein.

$$LoG(x,y) = \nabla^2\big(I(x,y) \otimes G(x,y)\big)$$

$$LoG(x,y) = -\frac{1}{\pi\sigma^4}\left[1 - \frac{x^2 + y^2}{2\sigma^2}\right] e^{-\frac{x^2 + y^2}{2\sigma^2}}$$

In some examples, because a vertiport light/light source can appear as a relatively large object in an image at a shorter range and relatively small at the longer range, the combination of Kernels can be used to perform image convolution in two steps: (i) a standard kernel $\sigma$ = 1.01 as an example (based on lights and camera information) and (ii) a dynamically computed kernel based on the convolved image statistics details. In the step (ii), the function to compute the size of the kernel for the second convolution is based on the maximum intensity of the image after being convolved with the $\sigma$ = 1.01 kernel, for example, as expressed by:

$$\sigma_2 = k * max(I(\sigma_1))$$

This two step convolution enables dynamic application of an appropriate Kernel, where k is the weight factor based on the camera dynamic range.

According to examples disclosed herein, LoG Kernels can be utilized. In particular, the Laplacian is an isotropic measure that computes the second derivatives of an image and, thus, can provide a quantification of the rate of change of the first derivatives of the image, thereby making it suitable for edge detection. Accordingly, edges appear as peaks in first derivatives, whereas zero-crossings in the second derivatives of the image indicate a potential edge location. As shown in the middle/center of FIG. 5A, when the peaks of $\nabla I(x, y)$ exceed a certain threshold value, the peaks can be classified as edges. In the right portion of FIG. 5A, it can be observed how the peaks in $\nabla I(x, y)$ translate to zero-crossings in $\nabla^2 I(x, y)$.

Turning to FIGS. 5B-5E, according to examples disclosed herein, there can exist two options for Laplacian filtering. The first option includes (i) a Positive Laplacian that identifies outer edges in an image. This feature can be advantageous for vertiport detection to enhance the circular contour of the lights and perform circle detection afterwards. The second option is (ii) a Negative Laplacian that identifies the inner edges in an image, which can be useful for detecting the vertiport pseudo light sources/stars when their pixel intensity in the image is relatively high (e.g., the light sources/stars are represented as blobs). They can be filtered in a simple manner using thresholding, for example.

FIG. 5B depicts an example of LoG Kernel of $\sigma$ = *2 and size 13x13* using a negative Laplacian.

FIG. 5C depicts an example of LoG Kernel of $\sigma$ = *2 and size 13x13* using a positive Laplacian.

FIG. 5D depicts a result of the convolution of the kernel of FIG. 5A with a sample vertiport image (light blobs are highlighted), while FIG. 5E depicts a result of the convolution of the kernel of FIG. 5C with a sample vertiport image (enhanced pseudo-stars circular contour).

FIGS. 6A-6C illustrate example features of color-based rejection and image thresholding that can be implemented in examples disclosed herein. Turning to FIG. 6A, color-based rejection methods are utilized to discard any pixel that is inconsistent with the expected characteristics of a NIR light source from the vertiport. In this and certain other examples, the purpose of the function is to reject any pixel whose RGB content exceeds a threshold value. A threshold value is set such that the vertiport light pattern predominantly emits in the NIR band. For example, from 2 kilometers (km) away each pixel is mapped to a 7x7 m area on the ground so the vertiport lights will be fused with the background. If any of the R,G,B channels are above this threshold, their corresponding locations in the NIR channel can be masked with zero values, for example. Additionally, the vertiport lights will appear as bright objects in the NIR channel, therefore a second clutter rejection step is implemented to discard the regions in the NIR image below a given threshold value, which can be expressed as below, for example.

```
max_r_thresh, max_g_thresh, max_b_thresh – red, green, blue image layer thresholds
min_nir_thresh – NIR image threshold
For each pixel i, j in Image I perform:
If I(i, j) > max_r_thresh OR G(i, j) > max_g_thresh OR B(i, j) > max_b_thresh then:
filtered_nir(i, j) = 0
Else:
    If NIR(i, j) > min_nir_thresh:
        filtered_nir(i, j) = NIR(i, j)
    Else:
        filtered_nir(i, j) = 0
return filtered_nir
```

FIG. 6A depicts an example of RGB content filtering on an RGB-NIR image. In particular, the following is shown: (1) Extraction of the R, G and B channels; (2) Result of the thresholding operation on each channel. Threshold values *max_r_thresh, max_g_thresh* and *max_b_thresh* are set to 100; and (3) Result of the AND operation on the thresholded channels (left); and this mask is multiplied by the NIR input (middle) and the result is the filtered NIR image based on RGB content (right). FIG 6A further depicts (4) Creation of the *mask_nir* using a *min_nir_thresh* value of 160 (left) and multiplication by *filtered_nir_rgb* (middle) that yields, as a final result, the*filtered_nir* image (right).

FIG. 6B depicts an example of RGB-NIR clutter rejection on real image data such that following are shown: (a) an RGB input image, (b) an NIR channel of the same image, (c) a mask based on RGB contents above threshold = 75, (d) filtered_nir_rgb: result of mask (c) applied on the NIR channel (b), and (e) filtered_nir resulting image after thresholding of (d).

FIG. 6C corresponds to image thresholding. According to some examples disclosed herein, image thresholding can be employed to reject parts of the scene in view having intensities lower than a threshold value. After the input image from the camera is transformed by image convolutions to enhance the targets over the background, the thresholding step can reject most of the background. The following illustrates an example process of image thresholding.

Threshold_image (image, threshold)

For any pixel $i, j$ in image

If image$(i, j)$ > threshold:

thresholded_image(i, j) = 1

Else:

thresholded_image(i, j) = 0

Return thresholded_image

According to some examples disclosed herein, for input images, a transformed image with special filter can be utilized. Subsequently, a threshold can be computed using image statistics, such as mean and standard deviation as an example.

$$m = \frac{\sum_j^H \sum_i^V I(i,j)}{H \times V}, \quad th = \frac{max(I(i,j)) + m}{2} + 3\sigma_I$$

FIG. 6C illustrates (a) convolved LoG image prior to thresholding operation, and (b) a resultant thresholded image. Accordingly, an example of the thresholding function with real flight imagery data of the vertiport setup is shown in FIG. 6C. The input LoG image has been obtained from a negative Laplacian and, therefore, the threshold value described above has been set for this example.

FIGS. 7A and 7B illustrate example clustering and centroiding, respectively, that can be implemented in examples disclosed herein. According to examples disclosed herein, *the* result of an image thresholding step is the "Black (pixel count = 0) and White (pixel count = 1)" image, where bright pixels represent pixels above threshold. In the clustering and centroiding step of examples disclosed herein, neighbor pixels above threshold are clustered together and centroided.

Inputs can be described as the following. For example, thresholded_image can be an unsigned binary array having a unit of a brightness level such that "Black (pixel count = 0) and White (pixel count = 1)" image, where bright pixels represent pixels above threshold.

Outputs can be described as the following. For example, detections can be an integer array of [$(x_1,y_1)$ ... $(x_n,y_n)$] with a unit of px. The integer array can be an array of zeros (e.g., by default, by initialization, etc.). Accordingly, the integer array can be a list of centroid $(x, y)$ coordinates locations, for example.

As can be seen in the illustrated example of FIG. 7A, according to examples disclosed herein, a clustering technique is a type of region-growing algorithm used to build clusters with continuous connections in an image, particularly in a binary (e.g., black and white) image where bright pixels indicate values above a certain threshold. FIG. 7A depicts a region of growing clustering of neighbor pixels above a threshold while FIG. 7B corresponds to a resulting image.

According to examples disclosed herein, a region growing clustering algorithm can be described as the following:

1. Black and White image: bright indicates pixels above threshold
-> *arrayOfBrightPixelsLocations*
2. Build clusters

    2.a. Move to the first element (Pivot Point) of the *arrayOfBrightPixelsLocations* buffer = $P_{p1_1}$

        2.a.1. findNeighbors for pivot point $P_{p1}$, e.g.: $P_{p1_1}$, $P_{p1_2}$.... $P_{p1_n}$ assign found neighbors to cluster started from first pivot point, e.g.: $P_{p1}$ remove assigned neighbors from *arrayOfBrightPixelsLocations*
        2.a.2 findNeighbors for all neighbors in step 2.a.1

            assign found neighbors to clusters started from the 1st pivot point, e.g. $P_{p1_2}$, $P_{p1_2}$.
            remove assigned neighbors from *arrayOfBrightPixelsLocations* .....
            2.a.n Continue findNeighbors to next level until no neighbors exists for all $P_p$ identified starting from step 2.a

    2.b. Move to the next element of *arrayOfBrightPixelsLocations and start from step 2.a*
    2.c Repeat 2.b until *arrayOfBrightPixelsLocations* is empty

Where function findNeighbors() returns a list of neighbors of a given pixel that are still in array OfBrightPixelsLocations.

findNeighbors(pixel, arrayOfBrightPixelsLocations):

```
Initialize neighbors = []
(x, y) = pixel
// Check all possible adjacent neighbors
for (dx, dy) < sqrt(2):
neighbor = (x + dx, y + dy)
if neighbor is in arrayOfBrightPixelsLocations:
neighbors.append(neighbor)
return neighbors
```

Resulting neighbors can be used to calculate centroid (*x, y*) locations using center mass centroiding algorithm: According to some examples disclosed herein, centroiding can be implemented as follows. For example, points can be collected in the cluster by identifying all points $p_i = (x_i, y_i)$ that belong to the cluster such that each point has spatial coordinates $x_i$ *and* $y_i$, and weights $w_i$ are associated with the points (e.g., pixel intensity or importance)

Further, Centroid (Center of Mass) is calculated. If each point has a weight (pixel intensity), the following coordinates centroid coordinates can be calculated:

$$x_C = \frac{\sum_{i=1}^{N} w_i x_i}{\sum_{i=1}^{N} w_i}$$

$$y_C = \frac{\sum_{i=1}^{N} w_i y_i}{\sum_{i=1}^{N} w_i}$$

FIG. 8 is a block diagram of an example implementation of an example vision-based guidance analysis system 800. The vision-based guidance analysis system 800 of FIG. 8 may be instantiated (e.g., creating an instance of, bring into being for any length of time, materialize, implement, etc.) by programmable circuitry such as a Central Processor Unit (CPU) executing first instructions. Additionally or alternatively, the vision-based guidance analysis system 800 of FIG. 8 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 8 may, thus, be instantiated at the same or different times. Some or all of the circuitry of FIG. 8 may be instantiated, for example, in one or more threads executing concurrently on hardware and/or in series on hardware. Moreover, in some examples, some or all of the circuitry of FIG. 8 may be implemented by microprocessor circuitry executing instructions and/or FPGA circuitry performing operations to implement one or more virtual machines and/or containers.

The example vision-based guidance analysis system 800 includes example image interface circuitry 802, example image processing circuitry 804, example integrity monitoring circuitry 806, example position/attitude guidance calculator circuitry 808, and data storage 810. According to some examples disclosed herein, the vision-based guidance analysis system 800 includes and/or is communicatively coupled to the sensor(s) 112 and/or the navigation controller 114.

The example image interface circuitry 802 is utilized to receive and/or access image data from the sensor(s) 112, which is implemented as a camera or an image sensor carried by a vehicle in this example. In the illustrated example of FIG. 8, the image data corresponds to images taken from the image sensor 112. In particular, the images correspond to captured images of light (e.g., RGB and NIR light) emitted from a ground-based light pattern array. In this and certain other examples, the light pattern array includes multiple light sources arranged along a periphery thereof. According to some examples disclosed herein, edges of the periphery contain the light sources with different and/or irregular spacing therebetween. In some examples, the image interface circuitry 802 is instantiated by programmable circuitry executing image interface instructions and/or configured to perform operations such as those represented by the flowcharts of FIGS. 9 and 10.

According to some examples disclosed herein, the image processing circuitry 804 can be utilized to process and/or pre-process image data from the sensor(s) 112. For example, the image processing circuitry 804 can be utilized for spatial filtering. According to some examples disclosed herein, the image processing circuitry 804 can be utilized for color-based rejection (e.g., a four-color-based rejection). Additionally or alternatively, the image processing circuitry 804 performs clustering and/or centroiding of the image data. In some examples, the image processing circuitry 804 is instantiated by programmable circuitry executing image processing instructions and/or configured to perform operations such as those represented by the flowcharts of FIGS. 9 and 10.

The integrity monitoring circuitry 806 of the illustrated example is utilized to perform a multilayered integrity validation and/or monitoring of utilization of the light pattern array by the vehicle. According to some examples disclosed herein, the integrity monitoring circuitry 806 is utilized to perform a multilayered integrity validation by (i) performing a clutter rejection, (ii) geometry-based candidate screening/integrity protection, (iii) determining a candidate attitude/position Solution (or the equivalent Affine Transformation) formation and verification by internal consistency check, and (iv) matching the inertial data with the image-based solution validation. Accordingly, by performing the multilayered integrity validation, the integrity monitoring circuitry 806 can enable certification of automated guidance of vehicles with passengers, for example. In some examples, the integrity monitoring circuitry 806 is instantiated by programmable circuitry executing integrity monitoring instructions and/or configured to perform operations such as those represented by the flowcharts of FIGS. 9 and 10.

In this and certain other examples, the position/attitude guidance calculator circuitry 808 is implemented to guide movement of the vehicle. According to examples disclosed herein, the light pattern array is utilized to guide the vehicle in response to data/information associated with the light pattern array being validated and/or monitoring the light pattern array for validation. In some examples, the position/attitude guidance calculator circuitry 808 calculates a relative position, attitude and/or heading between the vehicle and the light pattern array. In some examples, the position/attitude guidance calculator circuitry 808 is instantiated by programmable circuitry executing position/guidance calculator instructions and/or configured to perform operations such as those represented by the flowcharts of FIGS. 9 and 10.

In some examples, the data storage 810 is implemented to store information related to pattern arrays, vertiports, spatial information, light source spacing information, etc.

While an example manner of implementing the vision-based guidance analysis system 800 is illustrated in FIG. 8, one or more of the elements, processes, and/or devices illustrated in FIG. 8 may be combined, divided, re-arranged, omitted, eliminated, and/or implemented in any other way. Further, the example image interface circuitry 802, the example image processing circuitry 804, the example integrity monitoring circuitry 806, the example position/attitude guidance calculator circuitry 808, and/or, more generally, the example vision-based guidance analysis system 800 of FIG. 8, may be implemented by hardware alone or by hardware in combination with software and/or firmware. Thus, for example, any of the example image interface circuitry 802, the example image processing circuitry 804, the example integrity monitoring circuitry 806, the example position/attitude guidance calculator circuitry 808, and/or, more generally, the example vision-based guidance analysis system 800, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example vision-based guidance analysis system 800 of FIG. 8 may include one or more elements, processes, and/or devices in addition to, or instead of, those illustrated in FIG. 8, and/or may include more than one of any or all of the illustrated elements, processes and devices.

Flowcharts representative of example machine readable instructions, which may be executed by programmable circuitry to implement and/or instantiate the vision-based guidance analysis system 800 of FIG. 8 and/or representative of example operations which may be performed by programmable circuitry to implement and/or instantiate the vision-based guidance analysis system 800 of FIG. 8, are shown in FIGS. 9 and 10. The machine readable instructions may be one or more executable programs or portion(s) of one or more executable programs for execution by programmable circuitry such as the programmable circuitry 1112 shown in the example processor platform 1100 discussed below in connection with FIG. 11 and/or may be one or more function(s) or portion(s) of functions to be performed by the example programmable circuitry (e.g., an FPGA) discussed below in connection with FIGS. 12 and/or 13. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowcharts illustrated in FIGS. 9 and 10, many other methods of implementing the example vision-based guidance analysis system 800 may alternatively be used. For example, the order of execution of the blocks of the flowcharts may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In certain other examples, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In certain other examples, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C-Sharp, Perl, Python, JavaScript, HyperText Markup Language (HTML), Structured Query Language (SQL), Swift, etc.

As mentioned above, the example operations of FIGS. 9 and 10 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 9 is a flowchart representative of example machine readable instructions and/or example operations 900 that may be executed, instantiated, and/or performed by programmable circuitry to detect light sources of a light pattern array to direct movement of a vehicle carrying an image sensor (e.g., a camera). The example machine-readable instructions and/or the example operations 900 of FIG. 9 begin at block 902, at which the image interface circuitry 802 retrieves and/or accesses image data/output from an image sensor (e.g., a camera) corresponding to light sources/lights of a vertiport and/or light pattern array. In the illustrated example of FIG. 9, the image interface circuitry 802 captures and/or accesses images of the light pattern array corresponding to a field of view of the vehicle carrying the image sensor. In some examples, the image sensor of the vehicle utilizes an RGB camera and an NIR camera to detect the aforementioned light sources.

At block 904, the image processing circuitry 804 performs image pre-processing of images of the light pattern array captured by the aforementioned image sensor. According to some examples disclosed herein, the image processing circuitry 804 performs spatial filtering of the images. In this example, the aspatial filtering makes features of the light sources more easily visible.

At block 906, the image processing circuitry 804 performs a clutter rejection (e.g., a color-based rejection) of the images. For example, a four-color based rejection is performed. In some such examples, the images can include images taken by a four-color camera carried by the vehicle.

At block 908, the image processing circuitry 804 performs clustering. The clustering performed by the image processing circuitry 804 can correspond to clustering neighboring pixels together.

At block 910, the image processing circuitry 804 performs centroiding. According to examples disclosed herein, centroid coordinates of the aforementioned neighboring pixels are determined and/or calculated.

At block 912, as will be discussed in greater detail below in connection with FIG. 10, the example integrity monitoring circuitry 806 performs multilayered integrity validation and monitoring of information (e.g., positioning information) corresponding to output from the image sensor carried by the vehicle.

At block 914, the example position/attitude guidance calculator circuitry 808 determines a relative position, heading, attitude, orientation and/or altitude of the vehicle with respect to the light pattern array.

At block 916, the example position/attitude guidance calculator circuitry 808 guides the vehicle based on the relative position, heading and/or altitude of the vehicle with respect to the light pattern array. In some examples, the position/attitude guidance calculator circuitry 808 guides the vehicle to land on the light pattern array (e.g., the light pattern array defines a vertiport).

At block 918, it is determined by the example integrity monitoring circuitry 806 and/or the example position/attitude guidance calculator circuitry 808 whether to repeat the process. If the process is to be repeated (block 918), control of the process returns to block 902. Otherwise, the process ends. The determination may be based on whether the vehicle requires further guidance and/or whether the vehicle has landed on a vertiport, for example.

FIG. 10 is a flowchart representative of example machine readable instructions and/or example operations 912 that may be executed, instantiated, and/or performed by programmable circuitry to validate data associated with the light pattern array to guide the vehicle based on the light pattern array. The example machine-readable instructions and/or the example operations 912 of FIG. 10 begin at block 1002, at which the example integrity monitoring circuitry 806 performs clutter rejection and/or an integrity protection. According to some examples disclosed herein, a four-color based clutter rejection is performed.

At block 1004, the integrity monitoring circuitry 806 of the illustrated example a geometry-based candidate screening. The geometry/pattern/template match can correspond to a line-segment ratio, for example. For example, the line-segment ratio can correspond to expected/unique distances between the light sources that uniquely identify a vertiport, for example.

At block 1006, the example integrity monitoring circuitry 806 determines a candidate solution and verifies. For example, the integrity monitoring circuitry 806 validates image sensor/camera data and/or calculated data corresponding to the light pattern array. According to examples disclosed herein, redundancy of the light sources of the light pattern array can be utilized (e.g., a number of light sources beyond four can be used to cross-validate the measurements). In this and certain other examples, by utilizing the database position of the light sources and transforming the positions to camera frame with the attitude and position of the camera determined using line of sight calculations with respect to four (or more) of the light sources, the predicted position of the light sources is matched against the measured position of the lights. If the measured and predicted positions of the light sources match, the light sources are consistent (e.g., with an expected configuration of the light sources). However, if the measured and the predicted positions of the light sources do not match, it can indicate an error or that a candidate solution is incorrect.

At block 1008, in this example, the integrity monitoring circuitry 806 matches image sensor/camera data with inertial data (e.g., INS data). In this and certain other examples, the integrity monitoring circuitry 806 matches a calculated and/or determined position/attitude using camera data with an inertial solution that is based on IMU measurements (e.g., IMU measurements stored in the history) as well as previous validated camera updates in the history. Accordingly, matching the position and attitude data of the camera and the inertial solution can be utilized in determining whether the position and attitude determined from the camera and/or image sensor data can be validated. In some examples, IMU voting (e.g., voting with three or more IMUs) is utilized to validate the inertial solution.

At block 1010, the example integrity monitoring circuitry 806 determines whether to repeat the process. If the process is to be repeated (block 1010), control of the process returns to block 1002. The determination may be based on whether the solution has sufficient validity and/or integrity. Otherwise, the process ends/returns.

FIG. 11 is a block diagram of an example programmable circuitry platform 1100 structured to execute and/or instantiate the example machine-readable instructions and/or the example operations of FIGS. 9 and 10 to implement the vision-based guidance analysis system 800 of FIG. 8. The programmable circuitry platform 1100 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 1100 of the illustrated example includes programmable circuitry 1112. The programmable circuitry 1112 of the illustrated example is hardware. For example, the programmable circuitry 1112 can be implemented by one or more integrated circuits, logic circuits, FPGAs, microprocessors, CPUs, GPUs, DSPs, and/or microcontrollers from any desired family or manufacturer. The programmable circuitry 1112 may be implemented by one or more semiconductor based (e.g., silicon based) devices. In this and certain other examples, the programmable circuitry 1112 implements the example image interface circuitry 802, the example image processing circuitry 804, the example integrity monitoring circuitry 806, and the example position/attitude guidance calculator circuitry 808.

The programmable circuitry 1112 of the illustrated example includes a local memory 1113 (e.g., a cache, registers, etc.). The programmable circuitry 1112 of the illustrated example is in communication with main memory 1114, 1116, which includes a volatile memory 1114 and a non-volatile memory 1116, by a bus 1118. The volatile memory 1114 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 1116 may be implemented by flash memory and/or any other desired type of memory device. Access to the main memory 1114, 1116 of the illustrated example is controlled by a memory controller 1117. In some examples, the memory controller 1117 may be implemented by one or more integrated circuits, logic circuits, microcontrollers from any desired family or manufacturer, or any other type of circuitry to manage the flow of data going to and from the main memory 1114, 1116.

The programmable circuitry platform 1100 of the illustrated example also includes interface circuitry 1120. The interface circuitry 1120 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In some examples including the illustrated example, one or more input devices 1122 are connected to the interface circuitry 1120. The input device(s) 1122 permit(s) a user (e.g., a human user, a machine user, etc.) to enter data and/or commands into the programmable circuitry 1112. The input device(s) 1122 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1124 are also connected to the interface circuitry 1120 of the illustrated example. The output device(s) 1124 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1120 of the illustrated example, thus, typically includes a graphics driver card, a graphics driver chip, and/or graphics processor circuitry such as a GPU.

The interface circuitry 1120 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1126. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1100 of the illustrated example also includes one or more mass storage discs or devices 1128 to store firmware, software, and/or data. Examples of such mass storage discs or devices 1128 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 1132, which may be implemented by the machine readable instructions of FIGS. 9 and 10, may be stored in the mass storage device 1128, in the volatile memory 1114, in the non-volatile memory 1116, and/or on at least one non-transitory computer readable storage medium such as a CD or DVD which may be removable.

FIG. 12 is a block diagram of an example implementation of the programmable circuitry 1112 of FIG. 11. In this and certain other examples, the programmable circuitry 1112 of FIG. 11 is implemented by a microprocessor 1200. For example, the microprocessor 1200 may be a general-purpose microprocessor (e.g., general-purpose microprocessor circuitry). The microprocessor 1200 executes some or all of the machine-readable instructions of the flowcharts of FIGS. 9 and 10 to effectively instantiate the circuitry of FIG. 8 as logic circuits to perform operations corresponding to those machine readable instructions. In some such examples, the circuitry of FIG. 8 is instantiated by the hardware circuits of the microprocessor 1200 in combination with the machine-readable instructions. For example, the microprocessor 1200 may be implemented by multi-core hardware circuitry such as a CPU, a DSP, a GPU, an XPU, etc. Although it may include any number of example cores 1202 (e.g., 1 core), the microprocessor 1200 of this example is a multi-core semiconductor device including N cores. The cores 1202 of the microprocessor 1200 may operate independently or may cooperate to execute machine readable instructions. For example, machine code corresponding to a firmware program, an embedded software program, or a software program may be executed by one of the cores 1202 or may be executed by multiple ones of the cores 1202 at the same or different times. In some examples, the machine code corresponding to the firmware program, the embedded software program, or the software program is split into threads and executed in parallel by two or more of the cores 1202. The software program may correspond to a portion or all of the machine readable instructions and/or operations represented by the flowcharts of FIGS. 9 and 10.

The cores 1202 may communicate by a first example bus 1204. In some examples, the first bus 1204 may be implemented by a communication bus to effectuate communication associated with one(s) of the cores 1202. For example, the first bus 1204 may be implemented by at least one of an Inter-Integrated Circuit (I2C) bus, a Serial Peripheral Interface (SPI) bus, a PCI bus, or a PCIe bus. Additionally or alternatively, the first bus 1204 may be implemented by any other type of computing or electrical bus. The cores 1202 may obtain data, instructions, and/or signals from one or more external devices by example interface circuitry 1206. The cores 1202 may output data, instructions, and/or signals to the one or more external devices by the interface circuitry 1206. Although the cores 1202 of this example include example local memory 1220 (e.g., Level 1 (L1) cache that may be split into an L1 data cache and an L1 instruction cache), the microprocessor 1200 also includes example shared memory 1210 that may be shared by the cores (e.g., Level 2 (L2 cache)) for high-speed access to data and/or instructions. Data and/or instructions may be transferred (e.g., shared) by writing to and/or reading from the shared memory 1210. The local memory 1220 of each of the cores 1202 and the shared memory 1210 may be part of a hierarchy of storage devices including multiple levels of cache memory and the main memory (e.g., the main memory 1114, 1116 of FIG. 11). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1202 may be referred to as a CPU, DSP, GPU, etc., or any other type of hardware circuitry. Each core 1202 includes control unit circuitry 1214, arithmetic and logic (AL) circuitry (sometimes referred to as an ALU) 1216, a plurality of registers 1218, the local memory 1220, and a second example bus 1222. Other structures may be present. For example, each core 1202 may include vector unit circuitry, single instruction multiple data (SIMD) unit circuitry, load/store unit (LSU) circuitry, branch/jump unit circuitry, floating-point unit (FPU) circuitry, etc. The control unit circuitry 1214 includes semiconductor-based circuits structured to control (e.g., coordinate) data movement within the corresponding core 1202. The AL circuitry 1216 includes semiconductor-based circuits structured to perform one or more mathematic and/or logic operations on the data within the corresponding core 1202. The AL circuitry 1216 of some examples performs integer based operations. In other examples, the AL circuitry 1216 also performs floating-point operations. In yet other examples, the AL circuitry 1216 may include first AL circuitry that performs integer-based operations and second AL circuitry that performs floating-point operations. In some examples, the AL circuitry 1216 may be referred to as an Arithmetic Logic Unit (ALU).

The registers 1218 are semiconductor-based structures to store data and/or instructions such as results of one or more of the operations performed by the AL circuitry 1216 of the corresponding core 1202. For example, the registers 1218 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1218 may be arranged in a bank as shown in FIG. 12. Alternatively, the registers 1218 may be organized in any other arrangement, format, or structure, such as by being distributed throughout the core 1202 to shorten access time. The second bus 1222 may be implemented by at least one of an I2C bus, a SPI bus, a PCI bus, or a PCIe bus.

Each core 1202 and/or, more generally, the microprocessor 1200 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1200 is a semiconductor device fabricated to include many transistors interconnected to implement the structures described above in one or more integrated circuits (ICs) contained in one or more packages.

The microprocessor 1200 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1200, in the same chip package as the microprocessor 1200 and/or in one or more separate packages from the microprocessor 1200.

FIG. 13 is a block diagram of another example implementation of the programmable circuitry 1112 of FIG. 11. In this and certain other examples, the programmable circuitry 1112 is implemented by FPGA circuitry 1300. For example, the FPGA circuitry 1300 may be implemented by an FPGA. The FPGA circuitry 1300 can be used, for example, to perform operations that could otherwise be performed by the example microprocessor 1200 of FIG. 12 executing corresponding machine readable instructions. However, once configured, the FPGA circuitry 1300 instantiates the operations and/or functions corresponding to the machine readable instructions in hardware and, thus, can often execute the operations/-functions faster than they could be performed by a general-purpose microprocessor executing the corresponding software.

More specifically, in contrast to the microprocessor 1200 of FIG. 12 described above (which is a general purpose device that may be programmed to execute some or all of the machine readable instructions represented by the flowcharts of FIGS. 9 and 10 but whose interconnections and logic circuitry are fixed once fabricated), the FPGA circuitry 1300 of the example of FIG. 13 includes interconnections and logic circuitry that may be configured, structured, programmed, and/or interconnected in different ways after fabrication to instantiate, for example, some or all of the operations/functions corresponding to the machine readable instructions represented by the flowcharts of FIGS. 9 and 10. In particular, the FPGA circuitry 1300 may be thought of as an array of logic gates, interconnections, and switches. The switches can be programmed to change how the logic gates are interconnected by the interconnections, effectively forming one or more dedicated logic circuits (unless and until the FPGA circuitry 1300 is reprogrammed). The configured logic circuits enable the logic gates to cooperate in different ways to perform different operations on data received by input circuitry. Those operations may correspond to some or all of the instructions (e.g., the software and/or firmware) represented by the flowcharts of FIGS. 9 and 10. As such, the FPGA circuitry 1300 may be configured and/or structured to effectively instantiate some or all of the operations/functions corresponding to the machine readable instructions of the flowcharts of FIGS. 9 and 10 as dedicated logic circuits to perform the operations/functions corresponding to those software instructions in a dedicated manner analogous to an ASIC. Therefore, the FPGA circuitry 1300 may perform the operations/functions corresponding to the some or all of the machine readable instructions of FIGS. 9 and 10 faster than the general-purpose microprocessor can execute the same.

In the example of FIG. 13, the FPGA circuitry 1300 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1300 of FIG. 13 may access and/or load the binary file to cause the FPGA circuitry 1300 of FIG. 13 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1300 of FIG. 13 to cause configuration and/or structuring of the FPGA circuitry 1300 of FIG. 13, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1300 of FIG. 13 may access and/or load the binary file to cause the FPGA circuitry 1300 of FIG. 13 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1300 of FIG. 13 to cause configuration and/or structuring of the FPGA circuitry 1300 of FIG. 13, or portion(s) thereof.

The FPGA circuitry 1300 of FIG. 13, includes example input/output (I/O) circuitry 1302 to obtain and/or output data to/from example configuration circuitry 1304 and/or external hardware 1306. For example, the configuration circuitry 1304 may be implemented by interface circuitry that may obtain a binary file, which may be implemented by a bit stream, data, and/or machine-readable instructions, to configure the FPGA circuitry 1300, or portion(s) thereof. In some such examples, the configuration circuitry 1304 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1306 may be implemented by external hardware circuitry. For example, the external hardware 1306 may be implemented by the microprocessor 1200 of FIG. 12.

The FPGA circuitry 1300 also includes an array of example logic gate circuitry 1308, a plurality of example configurable interconnections 1310, and example storage circuitry 1312. The logic gate circuitry 1308 and the configurable interconnections 1310 are configurable to instantiate one or more operations/functions that may correspond to at least some of the machine readable instructions of FIGS. 9 and 10 and/or other desired operations. The logic gate circuitry 1308 shown in FIG. 13 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1308 to enable configuration of the electrical structures and/or the logic gates to form circuits to perform desired operations/functions. The logic gate circuitry 1308 may include other electrical structures such as look-up tables (LUTs), registers (e.g., flip-flops or latches), multiplexers, etc.

The configurable interconnections 1310 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1308 to program desired logic circuits.

The storage circuitry 1312 of the illustrated example is structured to store result(s) of the one or more of the operations performed by corresponding logic gates. The storage circuitry 1312 may be implemented by registers or the like. In the illustrated example, the storage circuitry 1312 is distributed amongst the logic gate circuitry 1308 to facilitate access and increase execution speed.

The example FPGA circuitry 1300 of FIG. 13 also includes example dedicated operations circuitry 1314. In this and certain other examples, the dedicated operations circuitry 1314 includes special purpose circuitry 1316 that may be invoked to implement commonly used functions to avoid the need to program those functions in the field. Examples of such special purpose circuitry 1316 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1300 may also include example general purpose programmable circuitry 1318 such as an example CPU 1320 and/or an example DSP 1322. Other general purpose programmable circuitry 1318 may additionally or alternatively be present such as a GPU, an XPU, etc., that can be programmed to perform other operations.

Although FIGS. 12 and 13 illustrate two example implementations of the programmable circuitry 1112 of FIG. 11, many other approaches are contemplated. For example, FPGA circuitry may include an on-board CPU, such as one or more of the example CPU 1320 of FIG. 12. Therefore, the programmable circuitry 1112 of FIG. 11 may additionally be implemented by combining at least the example microprocessor 1200 of FIG. 12 and the example FPGA circuitry 1300 of FIG. 13. In some such hybrid examples, one or more cores 1202 of FIG. 12 may execute a first portion of the machine readable instructions represented by the flowcharts of FIGS. 9 and 10 to perform first operation(s)/function(s), the FPGA circuitry 1300 of FIG. 13 may be configured and/or structured to perform second operation(s)/function(s) corresponding to a second portion of the machine readable instructions represented by the flowcharts of FIG. 9 and 10, and/or an ASIC may be configured and/or structured to perform third operation(s)/function(s) corresponding to a third portion of the machine readable instructions represented by the flowcharts of FIGS. 9 and 10.

It should be understood that some or all of the circuitry of FIG. 8 may, thus, be instantiated at the same or different times. For example, same and/or different portion(s) of the microprocessor 1200 of FIG. 12 may be programmed to execute portion(s) of machine-readable instructions at the same and/or different times. In some examples, same and/or different portion(s) of the FPGA circuitry 1300 of FIG. 13 may be configured and/or structured to perform operations/functions corresponding to portion(s) of machine-readable instructions at the same and/or different times.

In some examples, some or all of the circuitry of FIG. 8 may be instantiated, for example, in one or more threads executing concurrently and/or in series. For example, the microprocessor 1200 of FIG. 12 may execute machine readable instructions in one or more threads executing concurrently and/or in series. In some examples, the FPGA circuitry 1300 of FIG. 13 may be configured and/or structured to carry out operations/functions concurrently and/or in series. Moreover, in some examples, some or all of the circuitry of FIG. 8 may be implemented within one or more virtual machines and/or containers executing on the microprocessor 1200 of FIG. 12.

In some examples, the programmable circuitry 1112 of FIG. 11 may be in one or more packages. For example, the microprocessor 1200 of FIG. 12 and/or the FPGA circuitry 1300 of FIG. 13 may be in one or more packages. In some examples, an XPU may be implemented by the programmable circuitry 1112 of FIG. 11, which may be in one or more packages. For example, the XPU may include a CPU (e.g., the microprocessor 1200 of FIG. 12, the CPU 1320 of FIG. 13, etc.) in one package, a DSP (e.g., the DSP 1322 of FIG. 13) in another package, a GPU in yet another package, and an FPGA (e.g., the FPGA circuitry 1300 of FIG. 13) in still yet another package.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein, integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

Example methods, apparatus, systems, and articles of manufacture to enable robust vision-based guidance of a vehicle are disclosed herein. Further examples and combinations thereof include the following:

Example 1 includes a system comprising an image sensor carried by a vehicle, the image sensor to identify light sources of a ground-based pattern display, wherein a spatial arrangement of varying distances between the light sources defines a light pattern array, and at least one processor circuitry to perform a multi-layer integrity validation corresponding to the light pattern array based on the identified light sources for guidance of the vehicle via the light pattern array.

Example 2 includes the system as defined in example 1, wherein the image sensor is a four-color image sensor, and wherein one or more of the at least one processor circuitry is to perform a four-color based clutter rejection based on output of the four-color image sensor.

Example 3 includes the system as defined in example 1 or 2, wherein a first light source of the pattern display is to emit light at a first light emission spectrum and a second light source of the pattern display is to emit light at a second light emission spectrum different from the first light emission spectrum.

Example 4 includes the system as defined in example 3, wherein the first light source emits near infrared (NIR) light and the second light source emits red-green-blue (RGB) light.

Example 5 includes the system as defined in any of examples 1 to 4, wherein the pattern display includes an arrangement of the light sources on a periphery of a rectangular shape.

Example 6 includes the system as defined in example 5, wherein the light sources are arranged along the periphery with at least one of the light sources unevenly spaced relative to another of the light sources.

Example 7 includes the system as defined in example 5 o 6, wherein spacing between the light sources varies between each edge of the periphery of the rectangular shape.

Example 8 includes an apparatus to validate data corresponding to a ground-based light pattern array for guidance of a vehicle therewith, the apparatus comprising interface circuitry communicatively coupled to an image sensor supported by the vehicle, machine readable instructions, and programmable circuitry to at least one of instantiate or execute the machine readable instructions to identify, based on output from the image sensor, light sources of the ground-based light pattern array, an arrangement of the light sources defining a light pattern array, validate the data corresponding to the light pattern array based on the identified light sources via a multi-layer integrity validation, and enable guidance of the vehicle via the light pattern array in response to the data corresponding to the light pattern array being validated.

Example 9 includes the apparatus as defined in example 8, wherein the programmable circuitry is to at least one of instantiate or execute the machine readable instructions to perform the multi-layer validation of the data corresponding to the light pattern array by performing a clutter rejection, performing a geometry-based candidate screening, performing a validation of an image-based solution validation, and matching inertial data with the image-based solution.

Example 10 includes the apparatus as defined in example 8 or 9, wherein the programmable circuitry is to at least one of instantiate or execute the machine readable instructions to perform a color-based clutter rejection.

Example 11 includes the apparatus as defined in any of examples 8 to 10, wherein the programmable circuitry is to at least one of instantiate or execute the machine readable instructions to perform clustering and centroiding of images corresponding to the output from the image sensor.

Example 12 includes the apparatus as defined in any of examples 8 to 11, wherein the programmable circuitry is to at least one of instantiate or execute the machine readable instructions to perform spatial filtering of images corresponding to the output of the image sensor.

Example 13 includes the apparatus as defined in any of examples 8 to 12, wherein the validation of the light pattern includes validating data of the image sensor with inertial Kalman filter residuals.

Example 14 includes the apparatus as defined in any of examples 8 to 13, wherein the programmable circuitry is to at least one of instantiate or execute the machine readable instructions to perform a random sample consensus with respect to the validation of the pattern.

Example 15 includes the apparatus as defined in any of examples 8 to 14, wherein the programmable circuitry is to at least one of instantiate or execute the machine readable instructions to estimate an Affine transformation corresponding to an estimated attitude and position of the vehicle.

Example 16 includes the apparatus as defined in any of examples 8 to 15, wherein the programmable circuitry is to at least one of instantiate or execute the machine readable instructions to perform a clutter removal by image filtering of the output from the image sensor.

Example 17 includes at least one non-transitory machine-readable medium comprising machine-readable instructions to cause at least one processor circuit to at least identify, based on output from an image sensor of a vehicle, light sources of a pattern display, the light sources defining a pattern arrangement, validate data corresponding to the pattern arrangement with a multilayered integrity validation based on the identified light sources, and determine a position of the vehicle with respect to the pattern arrangement in response to the data being validated.

Example 18 includes the at least one non-transitory machine-readable medium as defined in example 17, wherein the machine-readable instructions are to cause one or more of the at least one processor circuit to perform a color-based rejection of the output of the image sensor.

Example 19 includes the at least one non-transitory machine-readable medium as defined in example 18, wherein the machine-readable instructions are to cause one or more of the at least one processor circuit to perform at least one of clustering or centroiding of the output of the image sensor.

Example 20 includes the at least one non-transitory machine-readable medium as defined in any of examples 17 to 19, wherein the machine-readable instructions are to cause one or more of the at least one processor circuit to validate the data corresponding to the pattern arrangement by performing a clutter rejection, performing a geometry-based candidate screening, validating a solution corresponding to the image sensor, and matching the solution corresponding to the image sensor with inertial data of the vehicle.

Example 21 includes the at least one non-transitory machine-readable medium as defined in any of examples 17 to 20, wherein the machine-readable instructions are to cause one or more of the at least one processor circuit to identify the light sources based on identifying different types of light sources of the pattern arrangement.

Example 22 includes the at least one non-transitory machine-readable medium as defined in any of examples 17 to 21, wherein the machine-readable instructions are to cause one or more of the at least one processor circuit to guide the vehicle to the pattern arrangement for landing thereon.

Example 23 includes the at least one non-transitory machine-readable medium as defined in any of examples 17 to 22, wherein the machine-readable instructions are to cause one or more of the at least one processor circuit to identify a two-dimensional pattern of a landing pad corresponding to the pattern display based on the pattern arrangement.

Example 24 includes the at least one non-transitory machine-readable medium as defined in any of examples 17 to 23, wherein the validation of the data corresponding to the pattern arrangement includes validating the output of the image sensor with inertial Kalman filter residuals.

Example 25 includes a method comprising identifying, based on output from an image sensor carried by a vehicle, light sources of a ground-based light pattern array, wherein a spatial arrangement of the light sources defines the light pattern array, validating data corresponding to the light pattern array via a multi-layer integrity validation, and enabling guidance of the vehicle via the light pattern array in response to the data corresponding to the light pattern array being validated.

Example 26 includes the method as defined in example 25, wherein validating the data corresponding to the pattern arrangement includes performing a clutter rejection, performing a geometry-based candidate screening, validating a solution corresponding to the image sensor, and matching the solution corresponding to the image sensor to inertial data of the vehicle.

From the foregoing, it will be appreciated that example systems, apparatus, articles of manufacture, and methods have been disclosed that enable effective guidance of vehicles. Examples disclosed herein can enable accurate validation of data corresponding to ground-based pattern displays, such as vertiports. Examples disclosed herein can enable meeting requirements necessitated for autonomous operation of a passenger vehicle, such as a passenger aircraft. Further, examples disclosed herein can also save weight and/or space of vehicles, such as aircraft, watercraft or spacecraft, for example. Disclosed systems, apparatus, articles of manufacture, and methods improve the efficiency of using a computing device by reducing computational needs typically associated with high precision guidance systems. Disclosed systems, apparatus, articles of manufacture, and methods are accordingly directed to one or more improvement(s) in the operation of a machine such as a computer or other electronic and/or mechanical device. Further, examples disclosed herein can enable utilization of relatively inexpensive cameras as opposed to high resolution cameras typically utilized in vision-based guidance.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A computer-implemented method comprising:

   identifying, based on output from an image sensor carried by a vehicle, light sources of a ground-based light pattern array, wherein a spatial arrangement of the light sources defines the light pattern array,
   validating data corresponding to the light pattern array via a multi-layer integrity validation, and
   enabling guidance of the vehicle via the light pattern array in response to the data corresponding to the light pattern array being validated.

2. The method of claim 1, wherein validating the data corresponding to the light pattern array includes:

   performing a clutter rejection;
   performing a geometry-based candidate screening;
   validating a solution corresponding to the image sensor; and
   matching the solution corresponding to the image sensor to inertial data of the vehicle.

3. The method of claim 1 or 2, wherein the image sensor is a four-color image sensor, and the method comprises performing a four-color based clutter rejection based on output of the four-color image sensor.

4. The method of any preceding claim, wherein:

   a first light source of the light pattern array emits light at a first light emission spectrum and a second light source of the light pattern array emits light at a second light emission spectrum different from the first light emission spectrum; and, optionally,
   the first light source emits near infrared (NIR) light and the second light source emits red-green-blue (RGB) light.

5. The method of any preceding claim, wherein:

   the light pattern array includes an arrangement of the light sources on a periphery of a rectangular shape; and, optionally,
   the light sources are arranged along the periphery with at least one of the light sources unevenly spaced relative to another of the light sources.

6. The method of claim 5, wherein spacing between the light sources varies between each edge of the periphery of the rectangular shape.

**7.** The method of any preceding claim, further comprising:

clustering and centroiding of images corresponding to the output from the image sensor; and/or
spatial filtering of images corresponding to the output of the image sensor.

**8.** The method of any preceding claim, wherein validation of the light pattern array includes validating data of the image sensor with inertial Kalman filter residuals.

**9.** The method of any preceding claim, further comprising:

performing a random sample consensus with respect to the validation of the light pattern array; and/or
estimating an Affine transformation corresponding to an estimated candidate attitude and position of the vehicle.

**10.** The method of any preceding claim, further comprising:

performing a clutter removal by image filtering of the output from the image sensor; and/or
identifying the light sources based on identifying different types of light sources of the light pattern array.

**11.** The method of any preceding claim, comprising guiding the vehicle to the light pattern array for landing thereon.

**12.** The method of any preceding claim, comprising identifying a two-dimensional pattern of a landing pad corresponding to the light pattern array.

**13.** A computer program comprising computer program instructions that, when executed by one or more computer processors, cause the one or more computer processors to perform the method of any preceding claim, or a computer readable medium having stored thereon.

**14.** Apparatus to validate data corresponding to a ground-based light pattern array for guidance of a vehicle therewith comprising: an image sensor (202) carried by a vehicle (100), one or more computer processors, and computer memory having stored therein the computer program of claim 13; or a vehicle or aircraft comprising such a system.

**15.** A system comprising:

a vehicle, optionally an aircraft, comprising an image sensor (202) carried by a vehicle (100), one or more computer processors, and computer memory having stored therein the computer program of claim 13; and
a ground-based light pattern array comprising light sources wherein a spatial arrangement of the light sources defines the light pattern array.

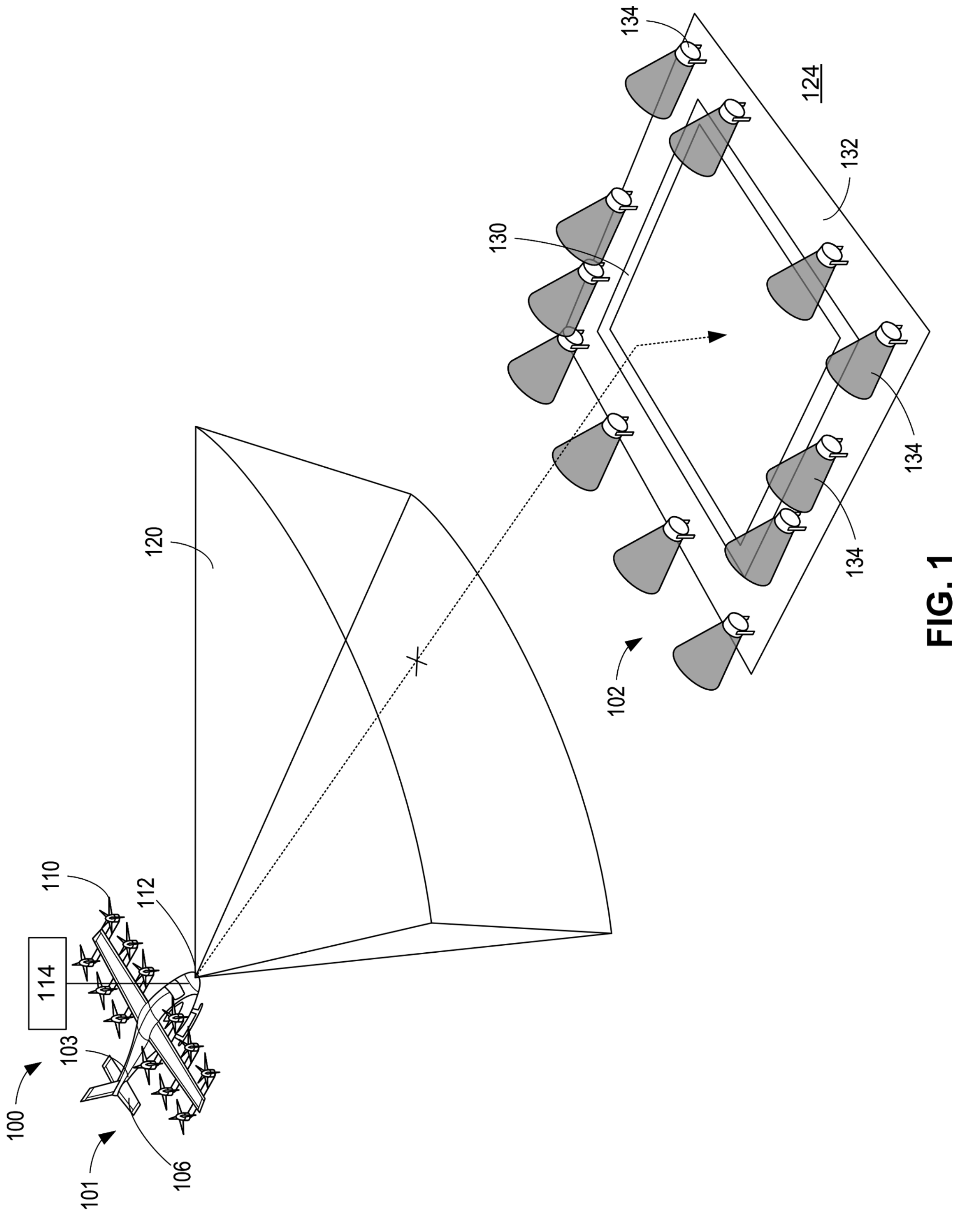


FIG. 1

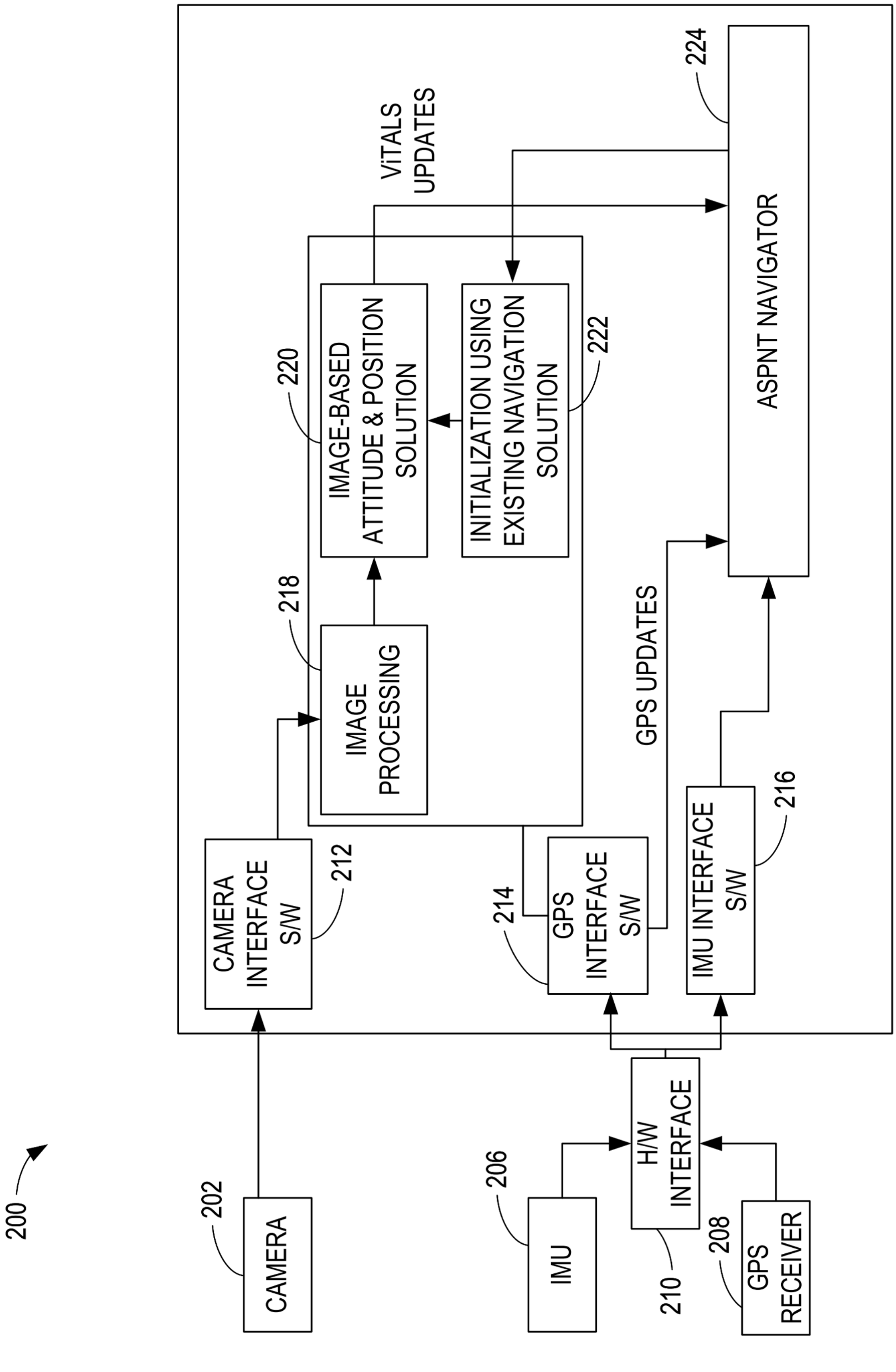
200
CAMERA
202
IMU
206
H/W INTERFACE
210
GPS RECEIVER
208
CAMERA INTERFACE S/W
212
GPS INTERFACE S/W
214
IMU INTERFACE S/W
216
IMAGE PROCESSING
218
IMAGE-BASED ATTITUDE & POSITION SOLUTION
220
INITIALIZATION USING EXISTING NAVIGATION SOLUTION
222
ViTALS UPDATES
GPS UPDATES
ASPNT NAVIGATOR
224

FIG. 2A

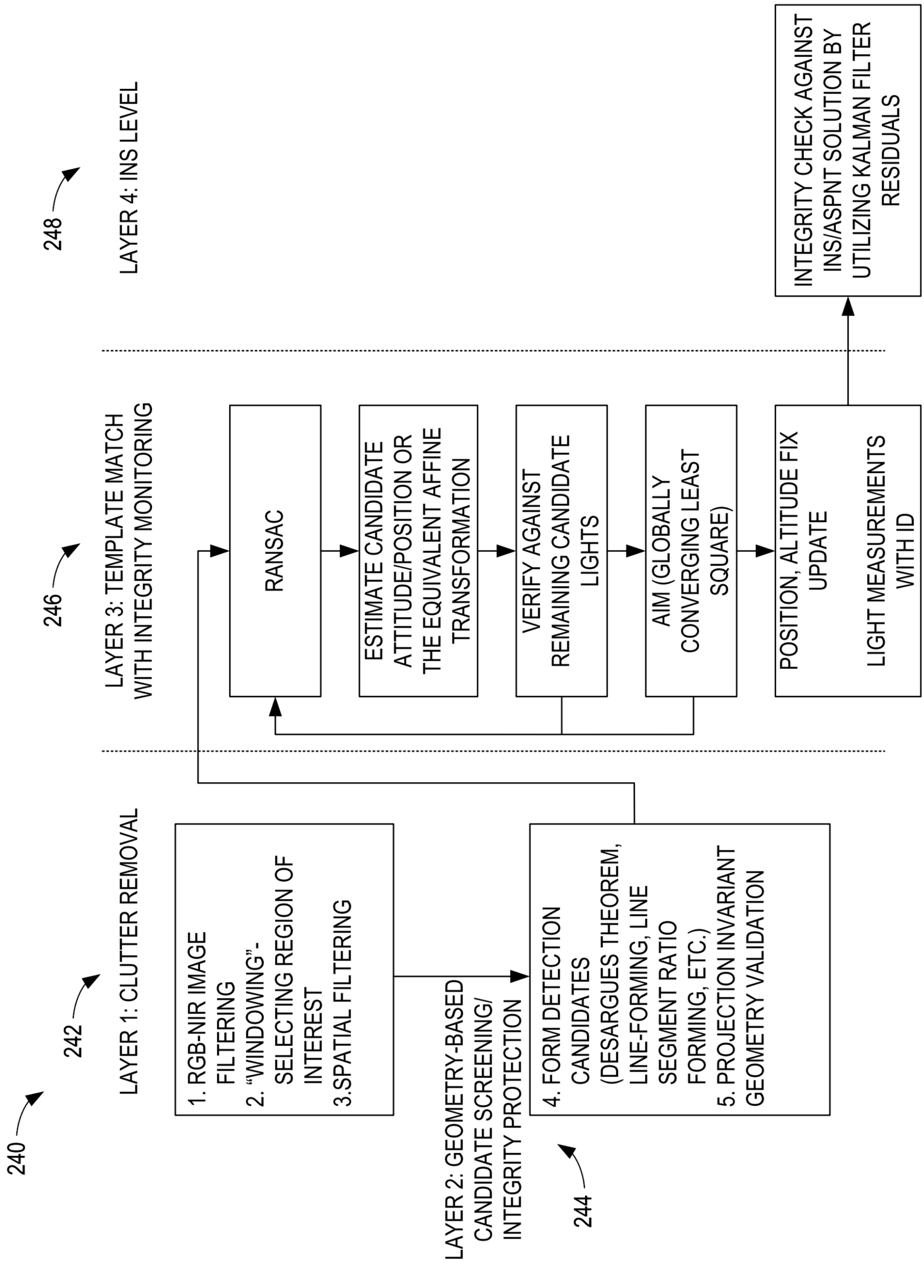
240
242
LAYER 1: CLUTTER REMOVAL
1. RGB-NIR IMAGE FILTERING
2. "WINDOWING"- SELECTING REGION OF INTEREST
3.SPATIAL FILTERING
LAYER 2: GEOMETRY-BASED CANDIDATE SCREENING/ INTEGRITY PROTECTION
244
4. FORM DETECTION CANDIDATES (DESARGUES THEOREM, LINE-FORMING, LINE SEGMENT RATIO FORMING, ETC.)
5. PROJECTION INVARIANT GEOMETRY VALIDATION
246
LAYER 3: TEMPLATE MATCH WITH INTEGRITY MONITORING
RANSAC
ESTIMATE CANDIDATE ATTITUDE/POSITION OR THE EQUIVALENT AFFINE TRANSFORMATION
VERIFY AGAINST REMAINING CANDIDATE LIGHTS
AIM (GLOBALLY CONVERGING LEAST SQUARE)
POSITION, ALTITUDE FIX UPDATE
LIGHT MEASUREMENTS WITH ID
248
LAYER 4: INS LEVEL
INTEGRITY CHECK AGAINST INS/ASPNT SOLUTION BY UTILIZING KALMAN FILTER RESIDUALS

FIG. 2B

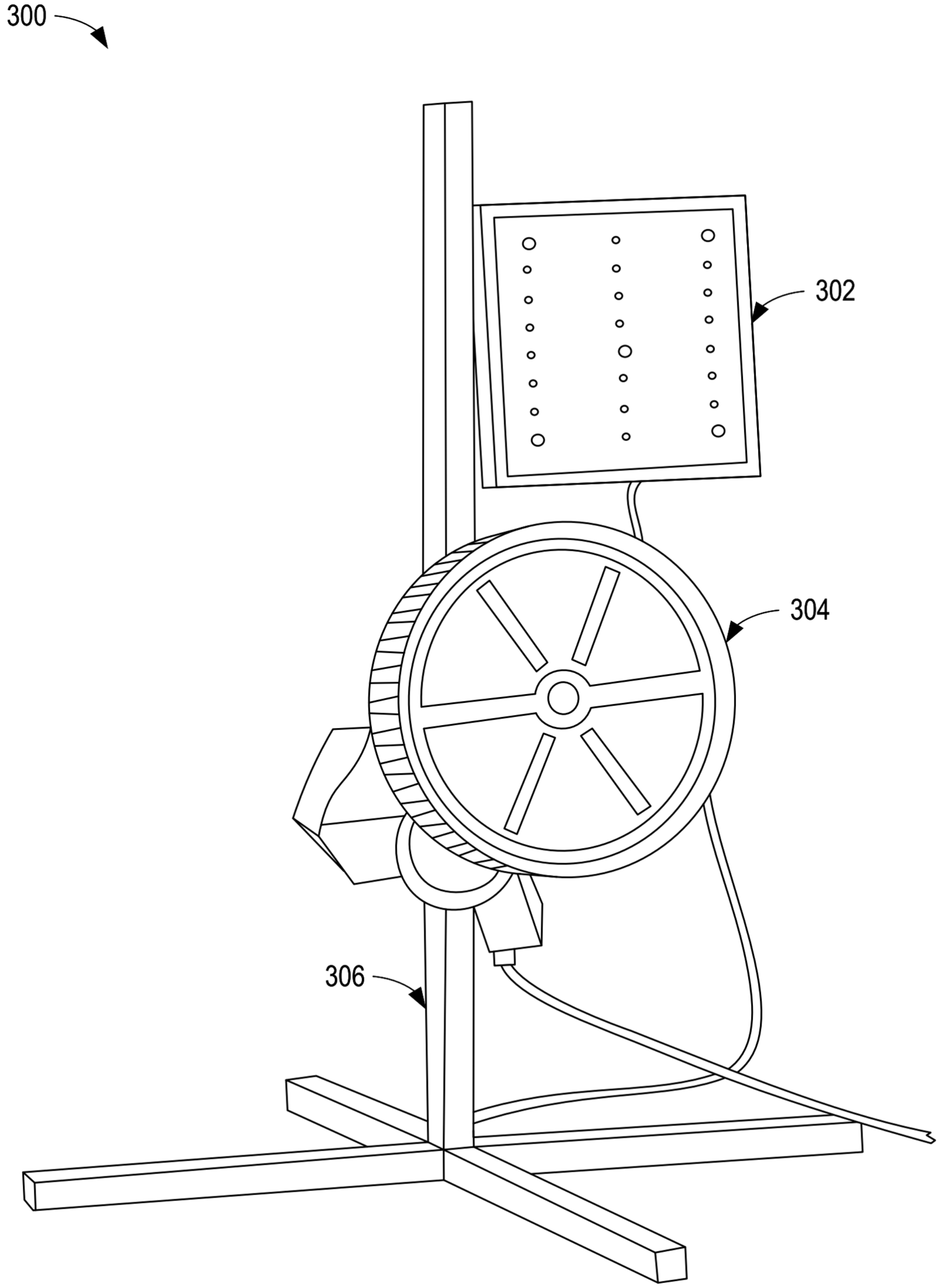


FIG. 3

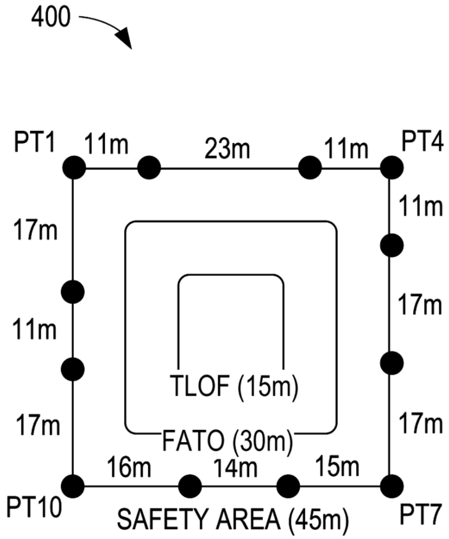


FIG. 4A

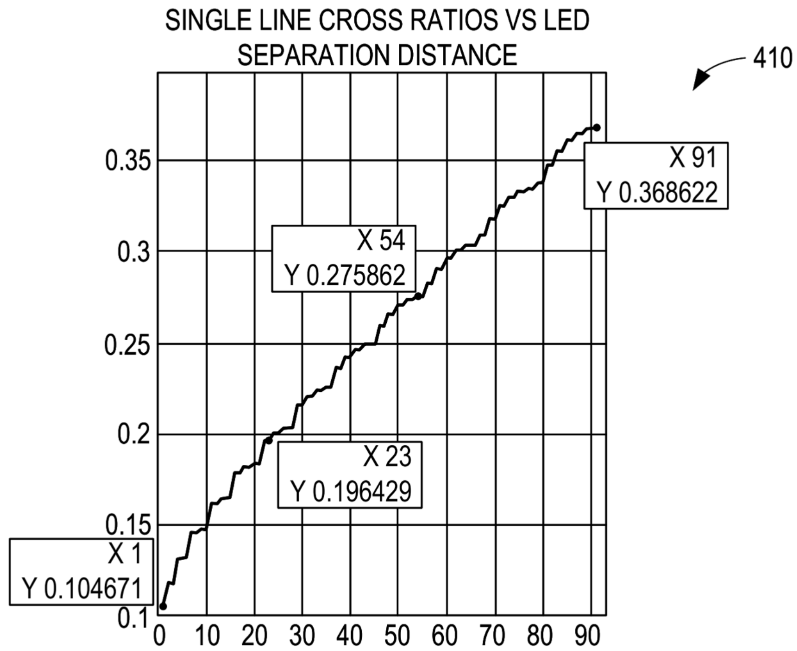


FIG. 4B

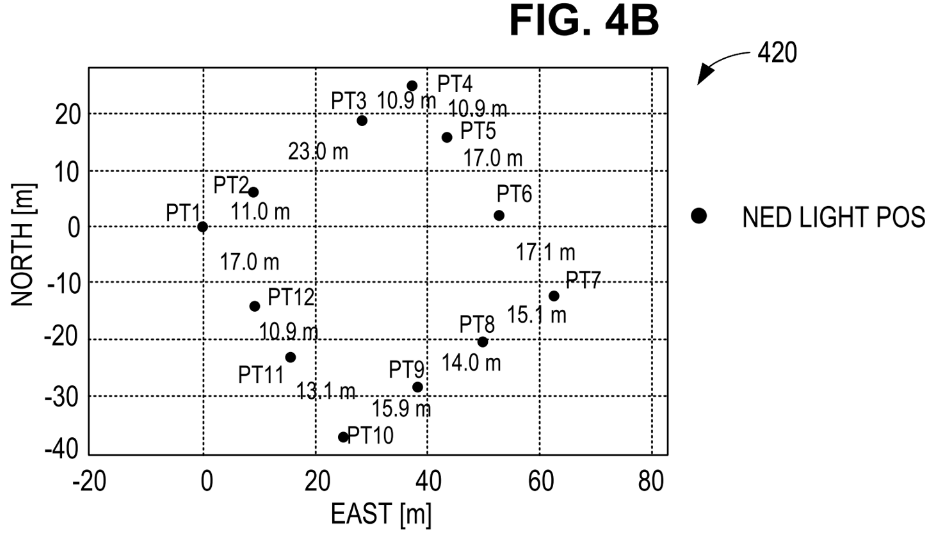


FIG. 4C

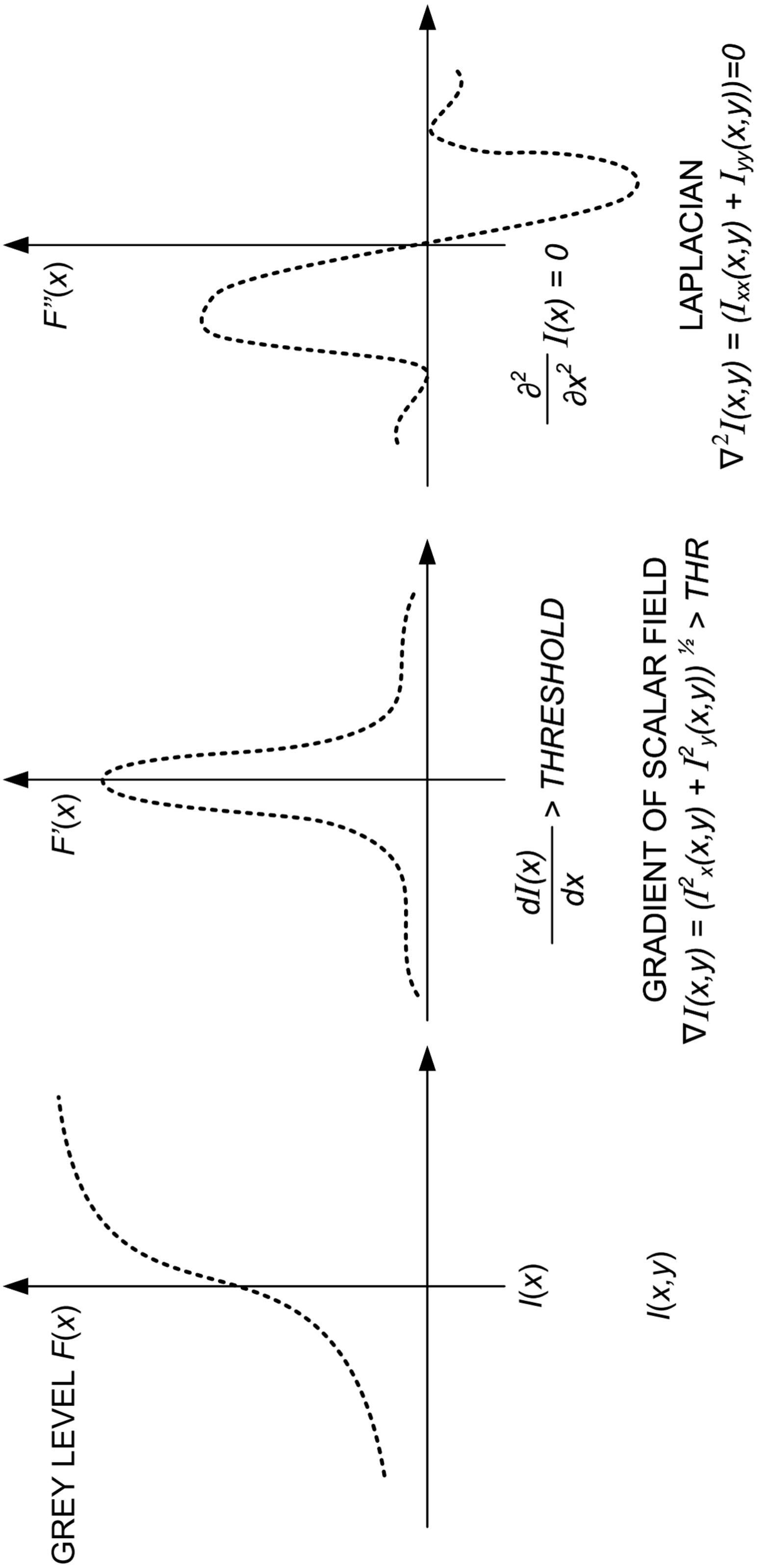
GREY LEVEL F(x)
I(x)
I(x,y)
F'(x)
dI(x)/dx > THRESHOLD
GRADIENT OF SCALAR FIELD
∇I(x,y) = (I²ₓ(x,y) + I²ᵧ(x,y)) ½ > THR
F''(x)
∂²/∂x² I(x) = 0
LAPLACIAN
∇²I(x,y) = (Iₓₓ(x,y) + Iᵧᵧ(x,y))=0

FIG. 5A

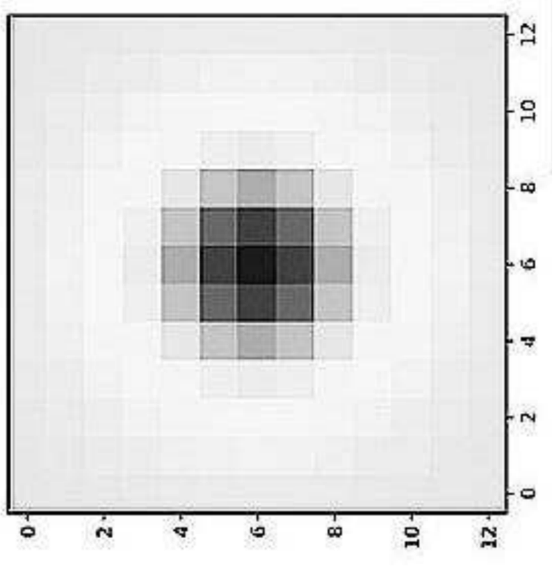


FIG. 5B

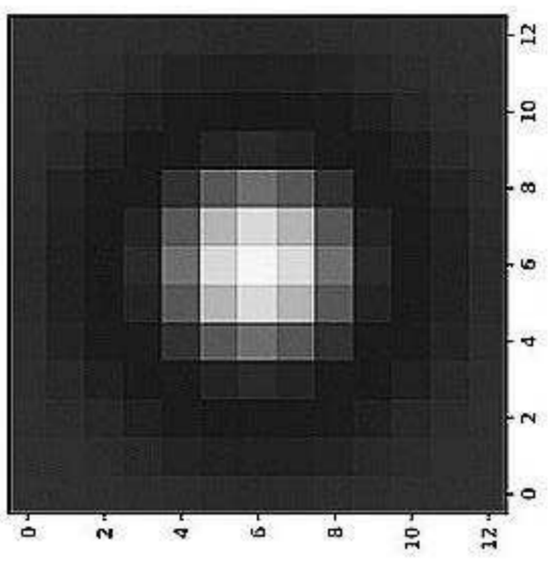


FIG. 5C

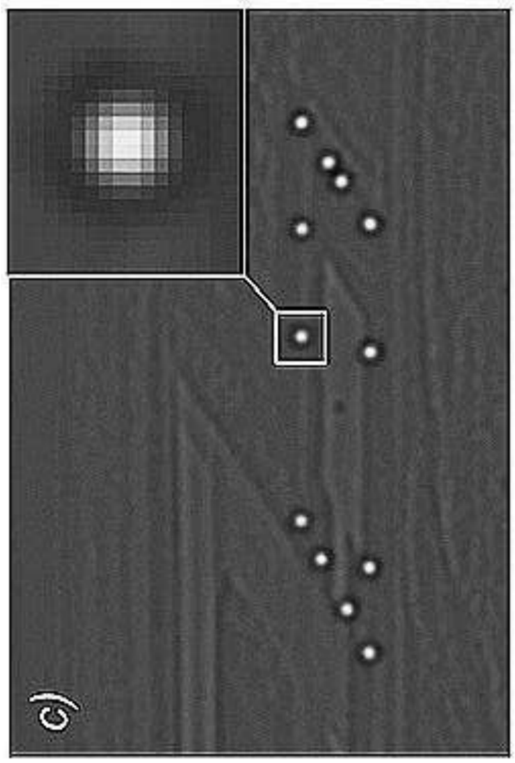


FIG. 5D

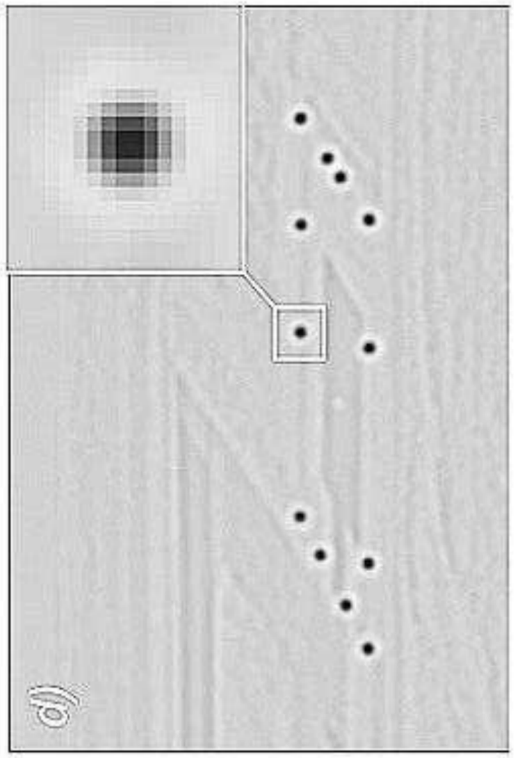


FIG. 5E

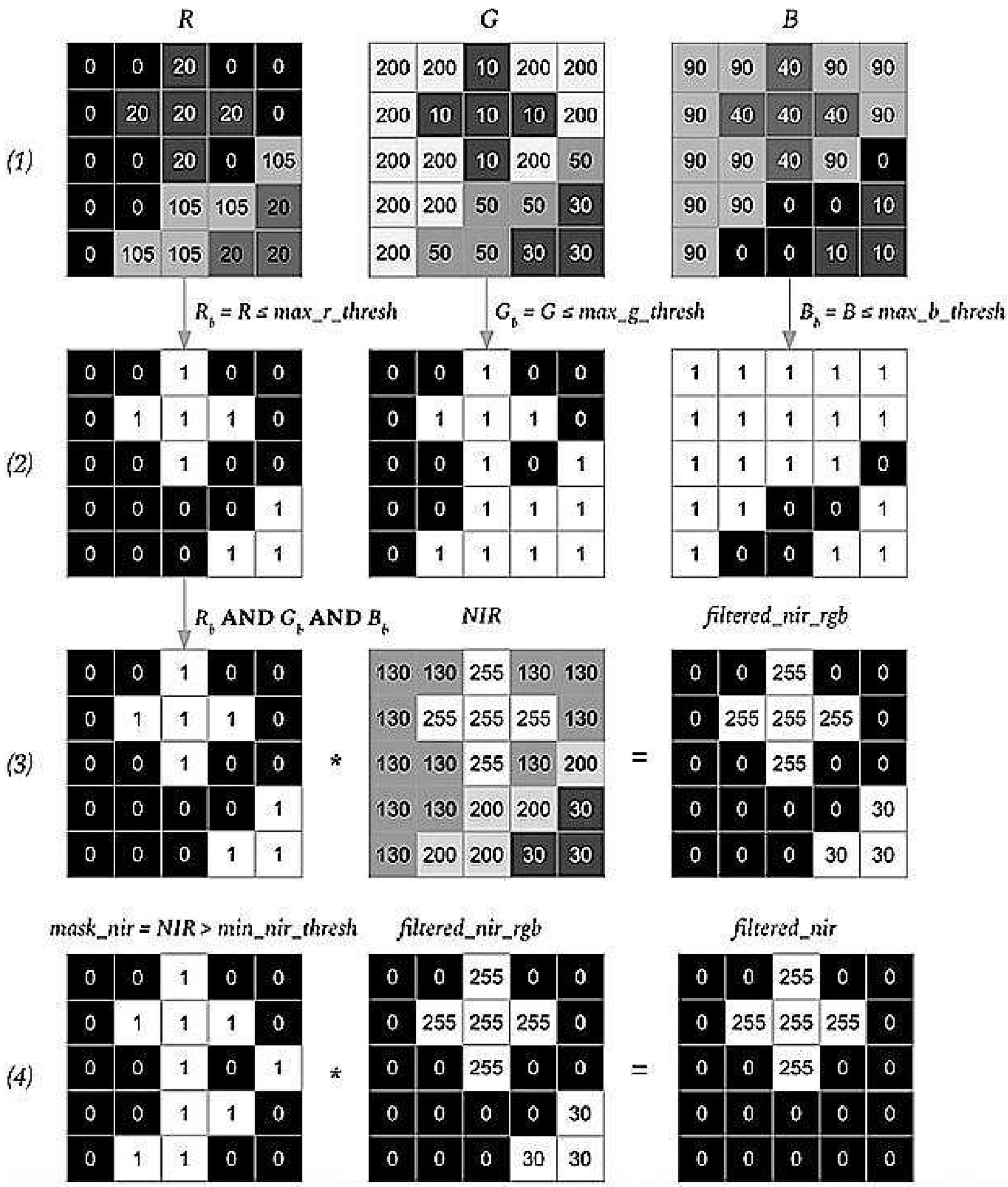
R
G
B
(1)
$R_b = R \leq max_r_thresh$
$G_b = G \leq max_g_thresh$
$B_b = B \leq max_b_thresh$
(2)
$R_b$ AND $G_b$ AND $B_b$
NIR
filtered_nir_rgb
(3)
*
=
mask_nir = NIR > min_nir_thresh
filtered_nir_rgb
filtered_nir
(4)
*
=

FIG. 6A

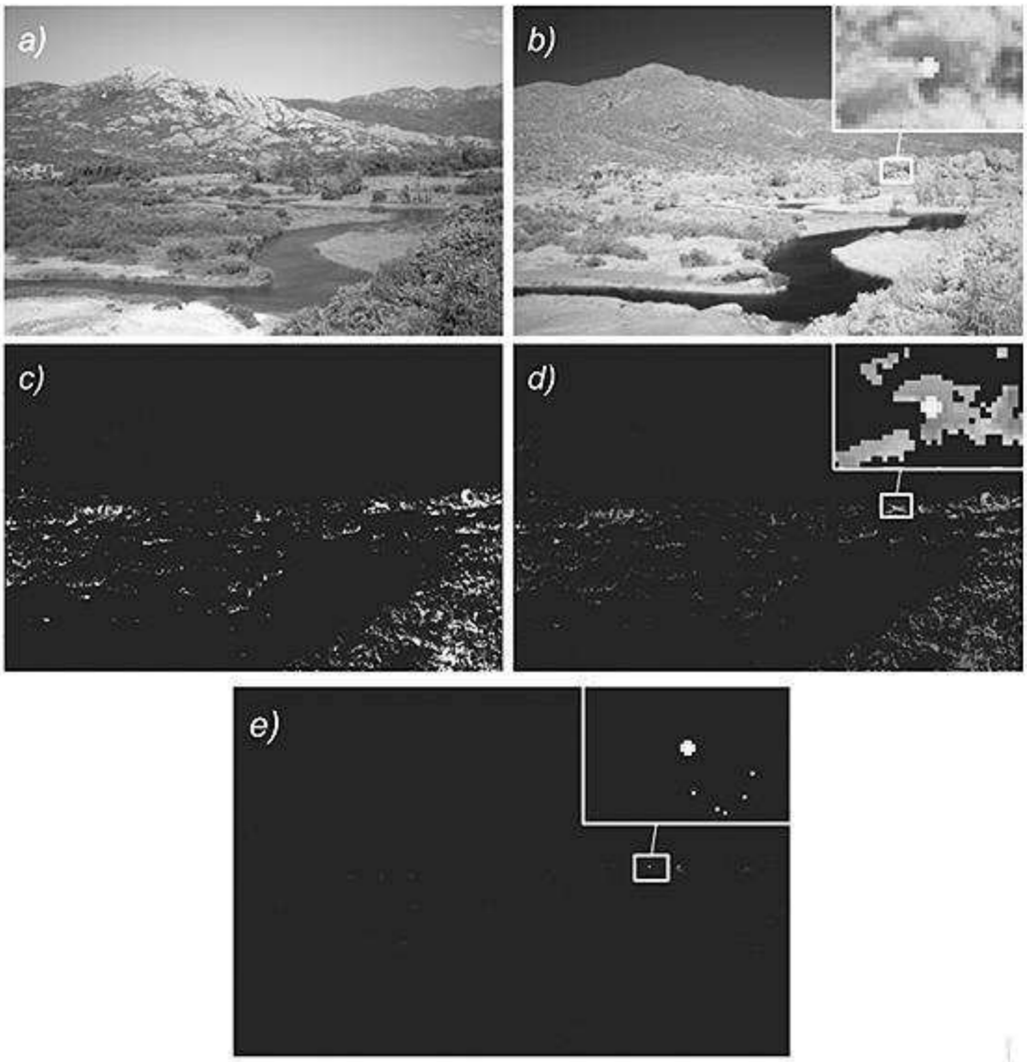


FIG. 6B

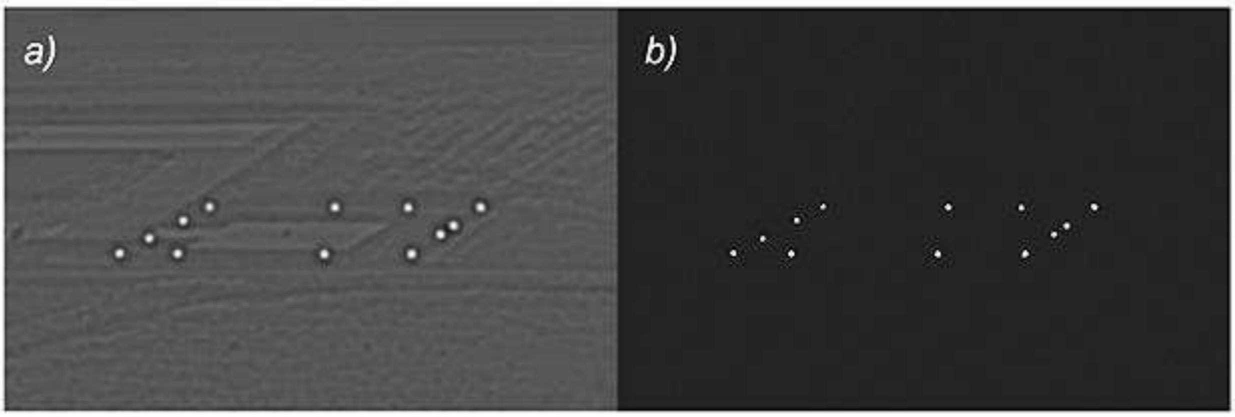


FIG. 6C

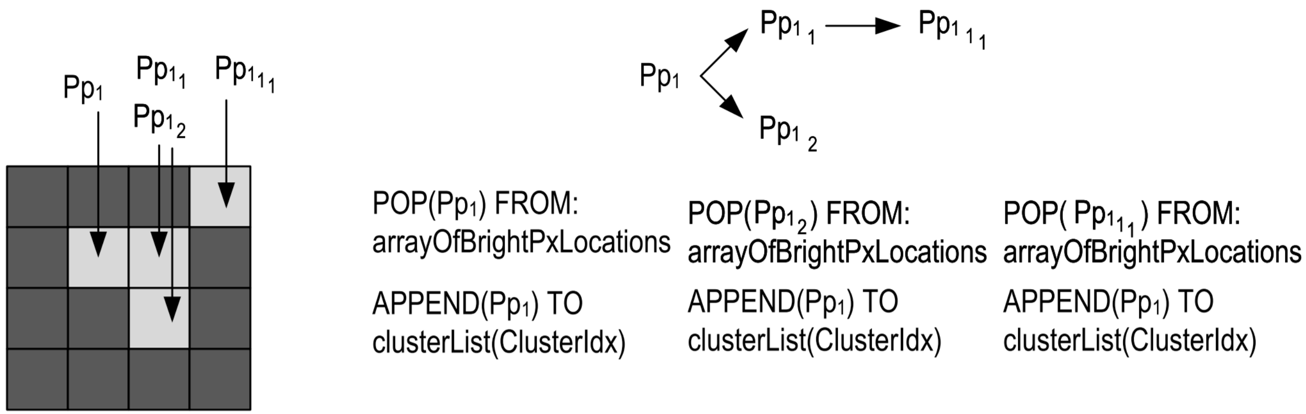

Pp1
Pp11
Pp12
Pp111
Pp1
Pp11
Pp111
Pp12
POP(Pp1) FROM:
arrayOfBrightPxLocations
APPEND(Pp1) TO
clusterList(ClusterIdx)
POP(Pp12) FROM:
arrayOfBrightPxLocations
APPEND(Pp1) TO
clusterList(ClusterIdx)
POP( Pp111 ) FROM:
arrayOfBrightPxLocations
APPEND(Pp1) TO
clusterList(ClusterIdx)


FIG. 7A

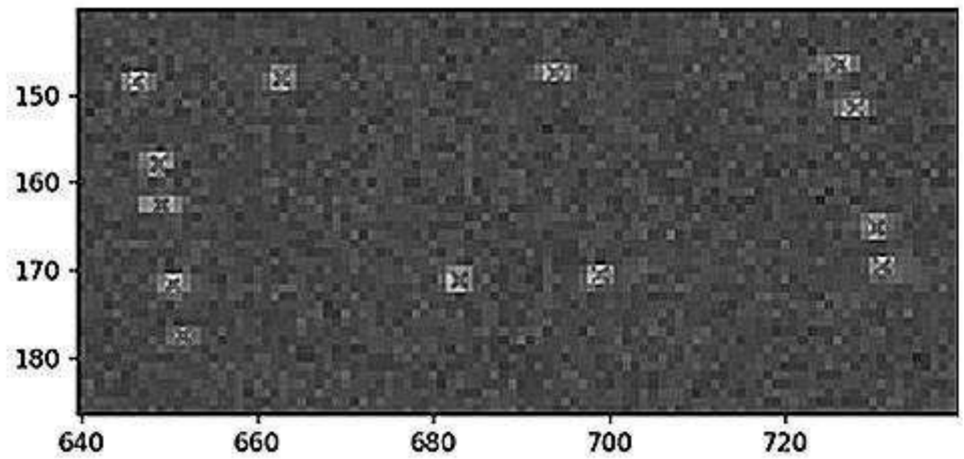

150
160
170
180
640
660
680
700
720


FIG. 7B

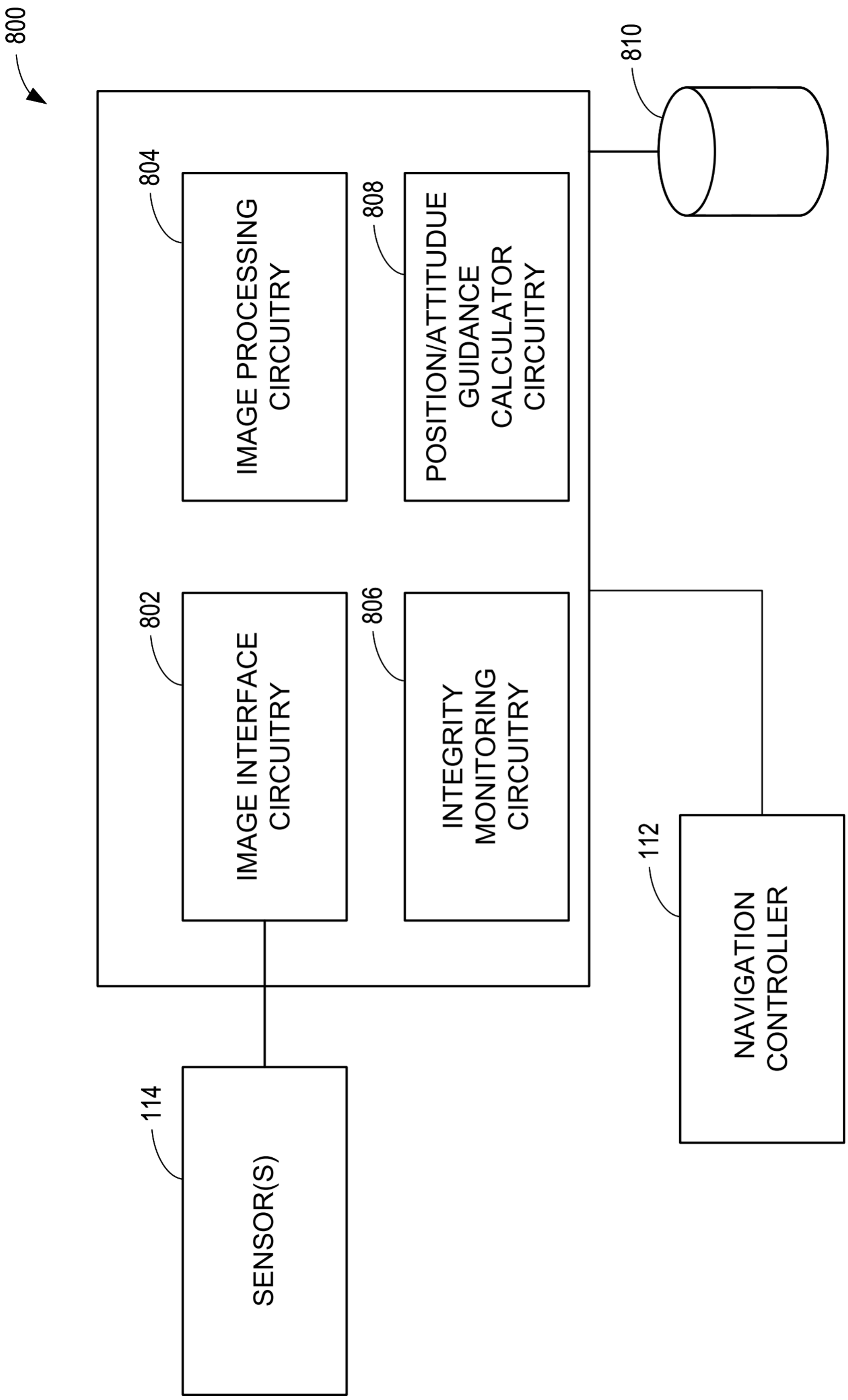
800
810
804
IMAGE PROCESSING CIRCUITRY
808
POSITION/ATTITUDUE GUIDANCE CALCULATOR CIRCUITRY
802
IMAGE INTERFACE CIRCUITRY
806
INTEGRITY MONITORING CIRCUITRY
112
NAVIGATION CONTROLLER
114
SENSOR(S)

FIG. 8

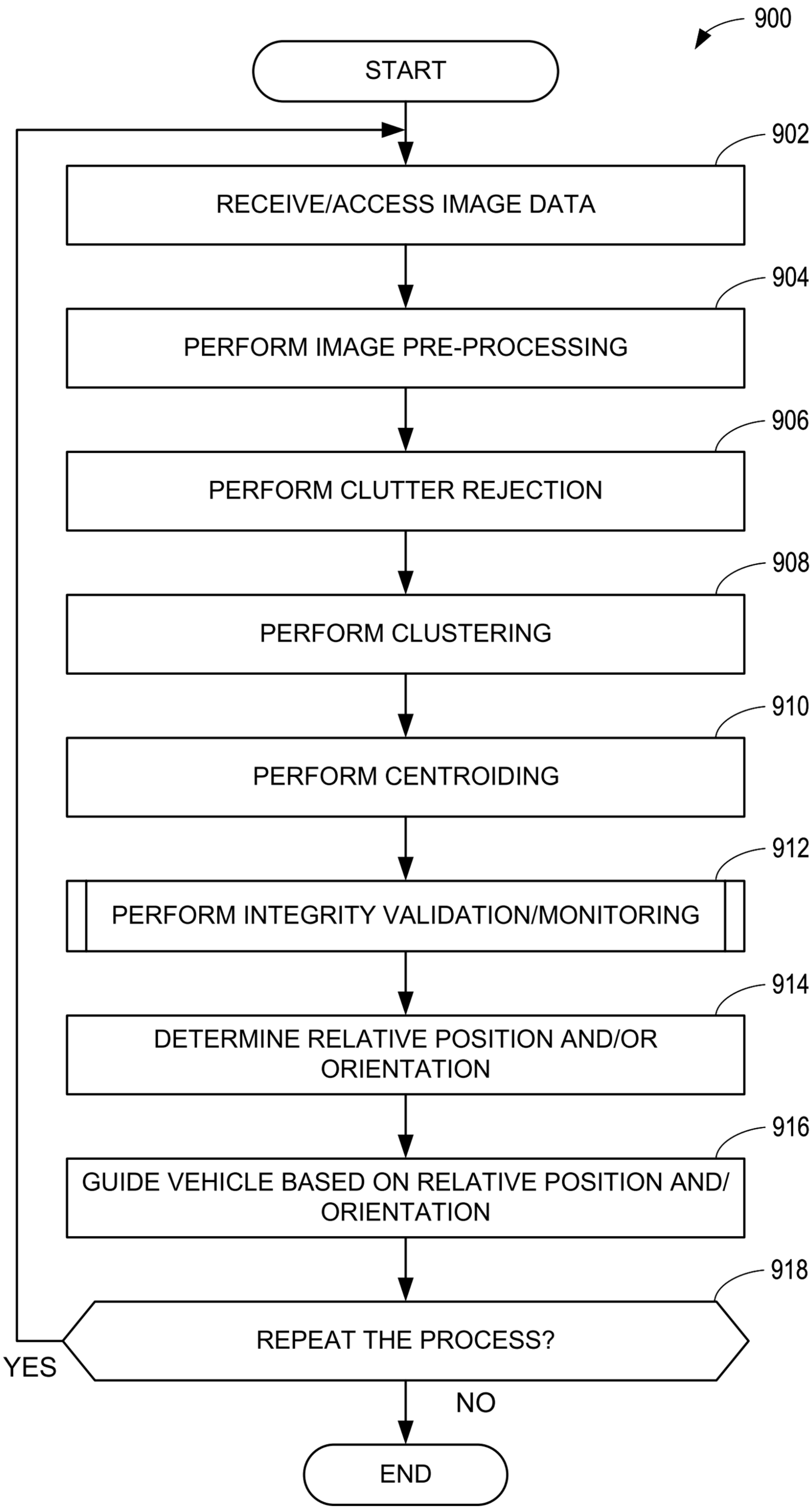
900
START
902
RECEIVE/ACCESS IMAGE DATA
904
PERFORM IMAGE PRE-PROCESSING
906
PERFORM CLUTTER REJECTION
908
PERFORM CLUSTERING
910
PERFORM CENTROIDING
912
PERFORM INTEGRITY VALIDATION/MONITORING
914
DETERMINE RELATIVE POSITION AND/OR ORIENTATION
916
GUIDE VEHICLE BASED ON RELATIVE POSITION AND/ ORIENTATION
918
REPEAT THE PROCESS?
YES
NO
END

FIG. 9

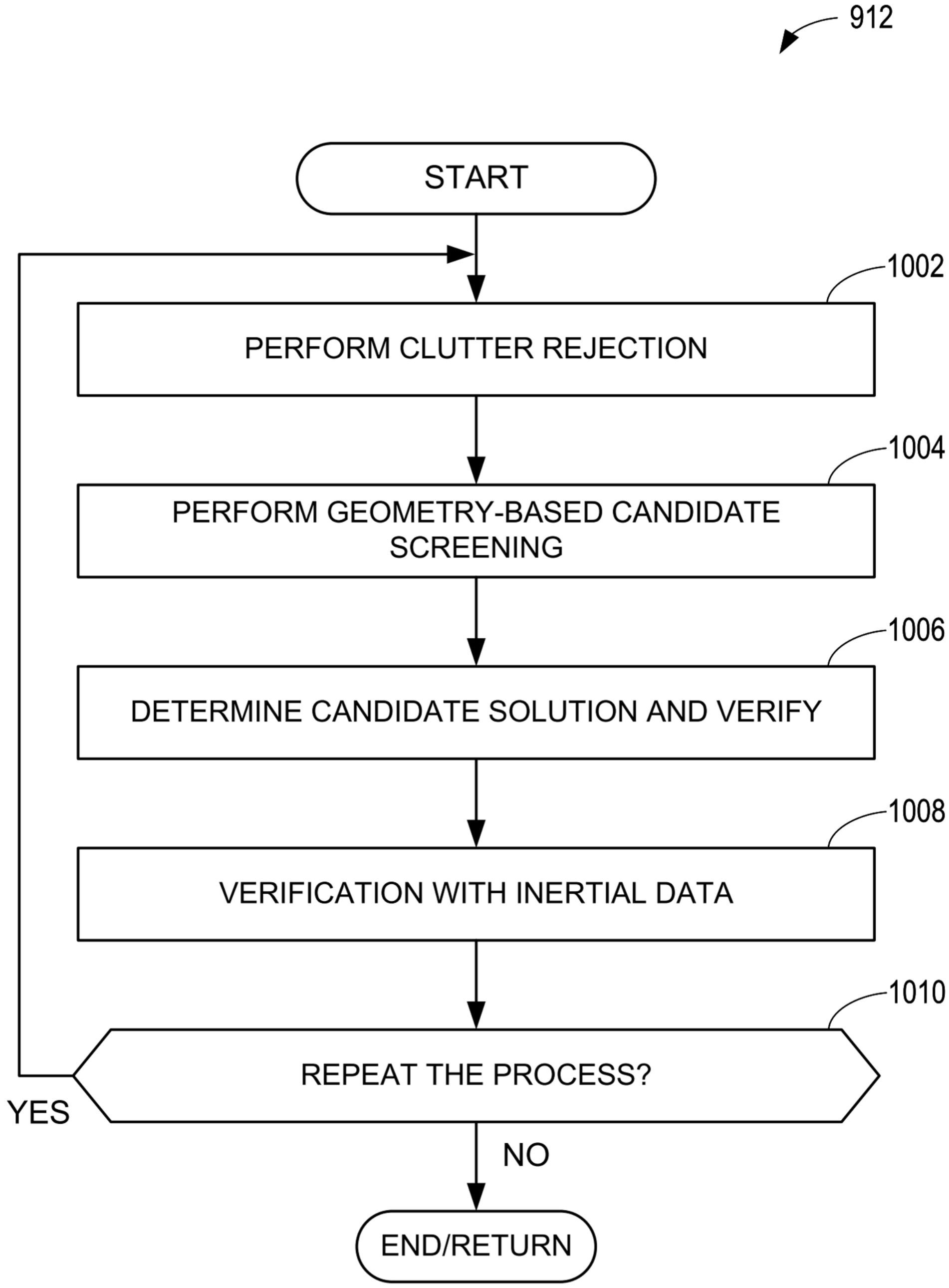
912
START
1002
PERFORM CLUTTER REJECTION
1004
PERFORM GEOMETRY-BASED CANDIDATE SCREENING
1006
DETERMINE CANDIDATE SOLUTION AND VERIFY
1008
VERIFICATION WITH INERTIAL DATA
1010
REPEAT THE PROCESS?
YES
NO
END/RETURN

FIG. 10

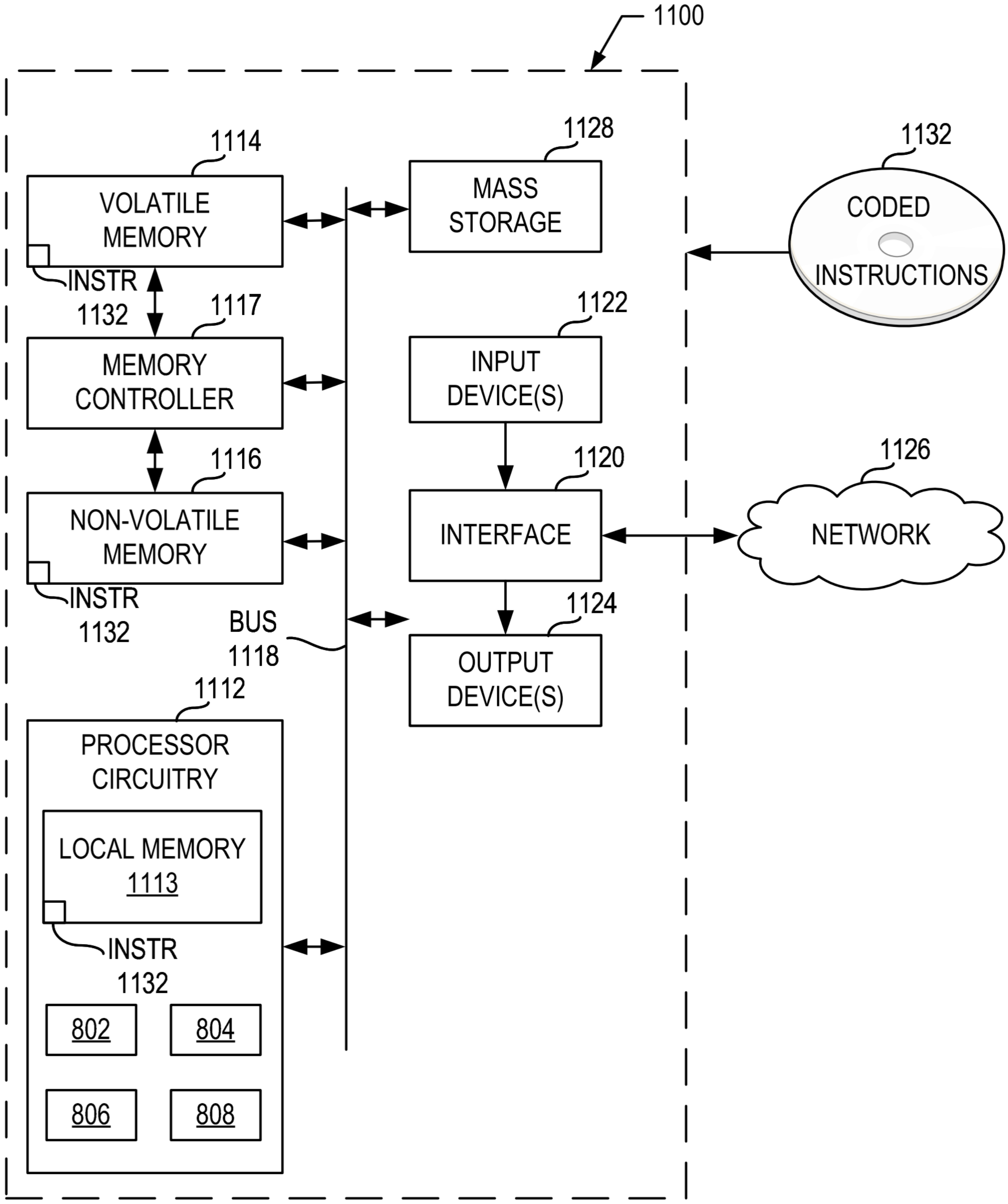
1100
1114
VOLATILE MEMORY
INSTR 1132
1117
MEMORY CONTROLLER
1116
NON-VOLATILE MEMORY
INSTR 1132
BUS 1118
1112
PROCESSOR CIRCUITRY
LOCAL MEMORY 1113
INSTR 1132
802
804
806
808
1128
MASS STORAGE
1122
INPUT DEVICE(S)
1120
INTERFACE
1124
OUTPUT DEVICE(S)
1132
CODED INSTRUCTIONS
1126
NETWORK

FIG. 11

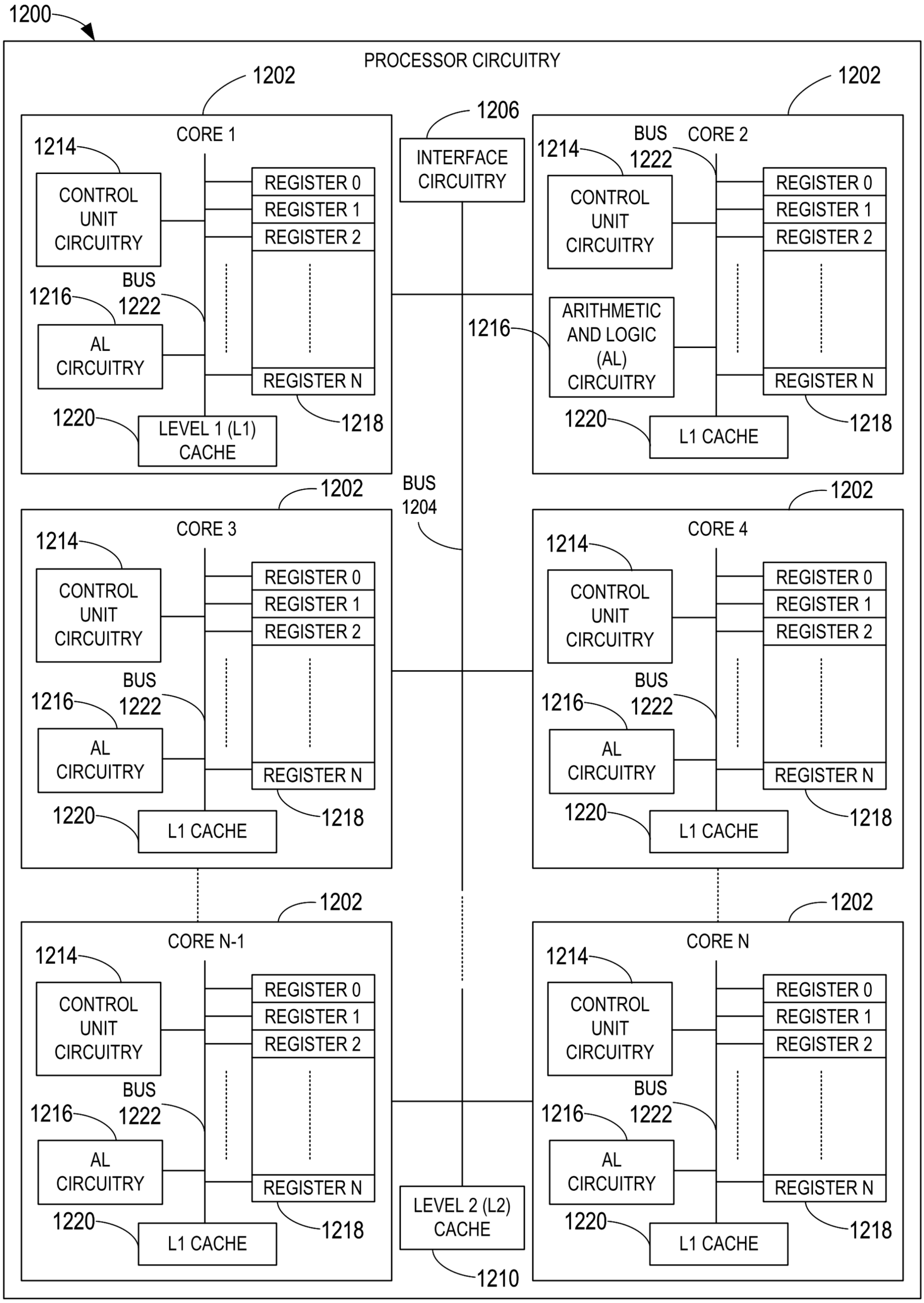
1200
PROCESSOR CIRCUITRY
1202
CORE 1
1214
CONTROL UNIT CIRCUITRY
1216
BUS 1222
AL CIRCUITRY
REGISTER 0
REGISTER 1
REGISTER 2
REGISTER N
1218
1220
LEVEL 1 (L1) CACHE
1206
INTERFACE CIRCUITRY
CORE 2
ARITHMETIC AND LOGIC (AL) CIRCUITRY
L1 CACHE
BUS 1204
CORE 3
CORE 4
CORE N-1
CORE N
LEVEL 2 (L2) CACHE
1210

FIG. 12

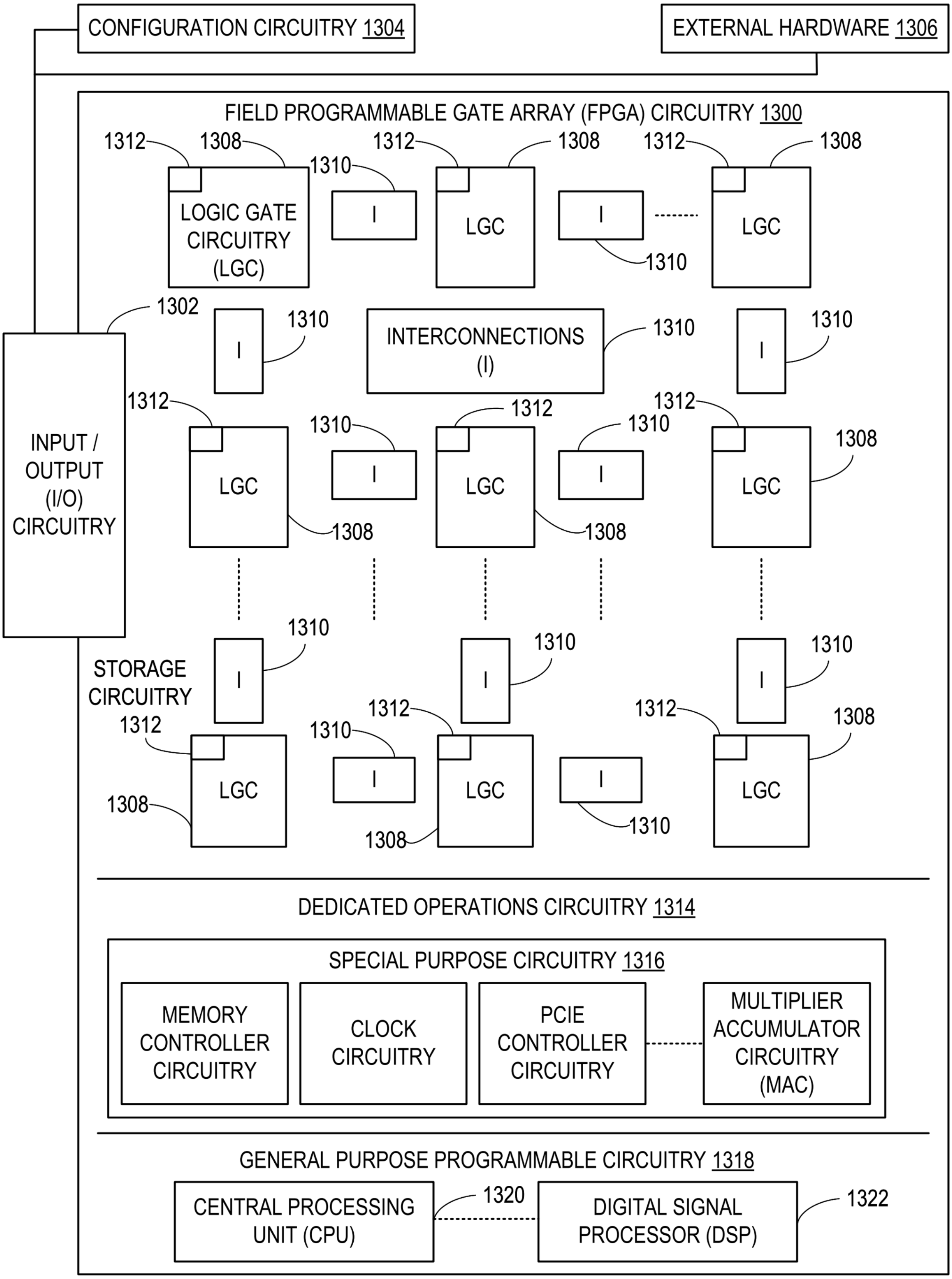
CONFIGURATION CIRCUITRY 1304
EXTERNAL HARDWARE 1306
FIELD PROGRAMMABLE GATE ARRAY (FPGA) CIRCUITRY 1300
1312
1308
1310
LOGIC GATE CIRCUITRY (LGC)
I
LGC
1302
INTERCONNECTIONS (I)
INPUT / OUTPUT (I/O) CIRCUITRY
STORAGE CIRCUITRY 1312
DEDICATED OPERATIONS CIRCUITRY 1314
SPECIAL PURPOSE CIRCUITRY 1316
MEMORY CONTROLLER CIRCUITRY
CLOCK CIRCUITRY
PCIE CONTROLLER CIRCUITRY
MULTIPLIER ACCUMULATOR CIRCUITRY (MAC)
GENERAL PURPOSE PROGRAMMABLE CIRCUITRY 1318
CENTRAL PROCESSING UNIT (CPU)
1320
DIGITAL SIGNAL PROCESSOR (DSP)
1322

FIG. 13

Europäisches Patentamt
European Patent Office
Office européen des brevets

# EUROPEAN SEARCH REPORT

Application Number
EP 25 21 5493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/097457 A2 (ARCHER AVIATION INC [US]) 10 May 2024 (2024-05-10)<br>* Figures: 14 ; [0004-0006], [0009-0010], [0036], [0106], [0111], [0116], [0119], [0126], [0134], [0139-0141], [0165], [0173], [0185], [0187], [0192], [0194-0195], [0235-0237], [0239], [0241], [0246], [0251-0254] ; *<br>----- | 1-15 | INV.<br>G06V20/17<br>B64D45/08<br>G08G5/54 |
| X | EP 4 484 302 A1 (BOEING CO [US])<br>1 January 2025 (2025-01-01)<br>* Figures: 1 ; [0018], [0020], [0023-0024], [0028], [0040-0043], [0058] ; abstract *<br>----- | 1 | |
| A | TONHUSER CHRISTIAN ET AL: "Integrity Concept for Image-Based Automated Landing Systems",<br>PNT 2015 - PROCEEDINGS OF THE ION 2015 PACIFIC PNT MEETING, THE INSTITUTE OF NAVIGATION, 8551 RIXLEW LANE SUITE 360 MANASSAS, VA 20109, USA,<br>23 April 2015 (2015-04-23), pages 733-747, XP056017436,<br>----- | 1 | TECHNICAL FIELDS SEARCHED (IPC)<br>G06V<br>B60V<br>G08G<br>B64D |
| A | DATABASE COMPENDEX [Online]<br>ENGINEERING INFORMATION, INC., NEW YORK, NY, US;<br>1 August 2022 (2022-08-01),<br>VENERUSO P [0000-0003-1181-8249] ET AL: "Sensing Requirements and Vision-Aided Navigation Algorithms for Vertical Landing in Good and Low Visibility UAM Scenarios",<br>XP093348883,<br>Database accession no. E20223612686201<br>* abstract *<br>-/-- | 1 | |

The present search report has been drawn up for all claims

| Place of search | Date of completion of the search | Examiner |
|---|---|---|
| The Hague | 8 January 2026 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 25 21 5493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | & VENERUSO P [0000-0003-1181-8249] ET AL: "Sensing Requirements and Vision-Aided Navigation Algorithms for Vertical Landing in Good and Low Visibility UAM Scenarios", REMOTE SENSING 20220801 MDPI CHE, vol. 14, no. 15, 1 August 2022 (2022-08-01), DOI: 10.3390/RS14153764<br>----- | | |
| A | ZHU CHEN ET AL: "Integrity of Visual Navigation-Developments, Challenges, and Prospects", 20220601, vol. 69, no. 2, 1 June 2022 (2022-06-01), XP056016932, DOI: HTTPS://DOI.ORG/10.33012/NAVI.518<br>----- | 1 | |
| A | US 11 749 126 B2 (RELIABLE ROBOTICS CORP [US]) 5 September 2023 (2023-09-05)<br>----- | 1 | |
| A | YASUDA YURI D V ET AL: "Aircraft visual inspection: A systematic literature review", COMPUTERS IN INDUSTRY, ELSEVIER, AMSTERDAM, NL, vol. 141, 21 May 2022 (2022-05-21), XP087090806, ISSN: 0166-3615, DOI: 10.1016/J.COMPIND.2022.103695 [retrieved on 2022-05-21]<br>----- | 1 | TECHNICAL FIELDS SEARCHED (IPC) |

The present search report has been drawn up for all claims

| Place of search | Date of completion of the search | Examiner |
|---|---|---|
| The Hague | 8 January 2026 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO. EP 25 21 5493

This annex lists the patent family members relating to the patent documents cited in the above-mentioned European search report. The members are as contained in the European Patent Office EDP file on
The European Patent Office is in no way liable for these particulars which are merely given for the purpose of information.

08-01-2026

| Patent document cited in search report | Publication date | Patent family member(s) | Publication date |
|---|---|---|---|
| WO 2024097457 A2 | 10-05-2024 | AU 2023372649 A1 | 12-06-2025 |
| | | CN 120359431 A | 22-07-2025 |
| | | EP 4609217 A2 | 03-09-2025 |
| | | JP 2025538961 A | 03-12-2025 |
| | | KR 20250102070 A | 04-07-2025 |
| | | US 12205484 B1 | 21-01-2025 |
| | | US 2025342769 A1 | 06-11-2025 |
| | | WO 2024097457 A2 | 10-05-2024 |
| EP 4484302 A1 | 01-01-2025 | AU 2024202303 A1 | 16-01-2025 |
| | | CN 119190382 A | 27-12-2024 |
| | | EP 4484302 A1 | 01-01-2025 |
| | | US 2024425199 A1 | 26-12-2024 |
| US 11749126 B2 | 05-09-2023 | NONE | |

EPO FORM P0459

For more details about this annex : see Official Journal of the European Patent Office, No. 12/82